(19) Europäisches Patentamt
European Patent Office
Office européen des brevets

(11) **EP 3 824 269 B1**

(12) **FASCICULE DE BREVET EUROPEEN**

(45) Date de publication et mention
de la délivrance du brevet:
**29.11.2023 Bulletin 2023/48**

(51) Classification Internationale des Brevets (IPC):
*G01N 21/00* (2006.01)    *G10B 1/00* (2006.01)
*G02B 21/36* (2006.01)

(21) Numéro de dépôt: **19745573.6**

(22) Date de dépôt: **16.07.2019**

(52) Classification Coopérative des Brevets (CPC):
**G02B 21/365; G01B 9/02075; G01B 9/02091;
G01N 21/4795**

(86) Numéro de dépôt international:
**PCT/EP2019/069158**

(87) Numéro de publication internationale:
**WO 2020/016249 (23.01.2020 Gazette 2020/04)**

(54) **PROCÉDÉ ET SYSTÈMES DE CARACTERISATION OPTIQUE NON INVASIVE D'UN MILIEU HÉTEROGÈNE**

VERFAHREN UND SYSTEME ZUR NICHTINVASIVEN OPTISCHEN CHARAKTERISIERUNG EINES HETEROGENEN MEDIUMS

METHOD AND SYSTEMS FOR THE NON-INVASIVE OPTICAL CHARACTERIZATION OF A HETEROGENEOUS MEDIUM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.07.2018 FR 1856725**

(43) Date de publication de la demande:
**26.05.2021 Bulletin 2021/21**

(73) Titulaires:
  • **Centre national de la recherche scientifique
    75016 Paris (FR)**
  • **Ecole Supérieure de Physique et de Chimie
    Industrielles de la Ville de Paris
    75005 Paris (FR)**

(72) Inventeurs:
  • **AUBRY, Alexandre
    94200 Ivry-Sur-Seine (FR)**
  • **BADON, Amaury
    Brookline, Massachusetts 02446 (US)**
  • **BAROLLE, Victor
    75010 Paris (FR)**
  • **BOCCARA, Claude
    75006 Paris (FR)**
  • **COBUS, Laura
    75020 Paris (FR)**
  • **FINK, Mathias
    92190 Meudon (FR)**
  • **LAMBERT, William
    75005 Paris (FR)**

(74) Mandataire: **IPAZ
    Bâtiment Platon
    Parc Les Algorithmes
    91190 Saint-Aubin (FR)**

(56) Documents cités:
    **WO-A1-2013/068783    US-A1- 2016 061 725**

  • YU ET AL: "Measuring large optical reflection
    matrices of turbid media", OPTICS
    COMMUNICATIONS,, vol. 352, 29 avril 2015
    (2015-04-29), pages 33-38, XP002791865,
  • DUBOIS A ET AL: "High-resolution full-field
    optical coherence tomography with a Linnik
    microscope", APPLIED OPTICS, OPTICAL
    SOCIETY OF AMERICA, WASHINGTON, DC; US,
    vol. 41, no. 4, 1 février 2002 (2002-02-01), pages
    805-812, XP002373646, ISSN: 0003-6935, DOI:
    10.1364/AO.41.000805 cité dans la demande

• YANG QIANG ET AL: "Deep imaging in highly scattering media by combining reflection matrix measurement with Bessel-like beam based optical coherence tomography", APPLIED PHYSICS LETTERS, A I P PUBLISHING LLC, US, vol. 113, no. 1, 3 juillet 2018 (2018-07-03), XP012229815, ISSN: 0003-6951, DOI: 10.1063/1.5036661 [extrait le 2018-07-03]

**Description**

DOMAINE TECHNIQUE

La présente description concerne des procédés et systèmes de caractérisation optique non invasive d'un milieu hétérogène, notamment d'un milieu biologique.

ETAT DE L'ART

La résolution d'un système d'imagerie optique est liée à sa capacité à discerner les petits détails d'un objet. Dans un système optique parfait, la résolution est limitée par la diffraction de manière absolue à $\lambda/2$ (où $\lambda$ est la longueur d'onde utilisée), et plus généralement par l'angle maximal de collection des rayons lumineux (c'est à dire l'ouverture numérique). Depuis les lunettes de vue jusqu'aux microscopes et aux télescopes, des siècles de perfectionnement dans le polissage, la conception des miroirs et des lentilles asphériques font que l'on sait maintenant fabriquer un système optique travaillant à la limite de la diffraction. Cependant, le milieu de propagation entre le système d'imagerie optique et le plan que l'on souhaite imager n'est pas toujours homogène et peut introduire des aberrations qui peuvent dégrader très fortement la qualité des images.

Pour améliorer la qualité des images, les astronomes ont proposé de mesurer et de compenser ces aberrations : c'est le principe de l'optique adaptative, proposé dès les années 1950. Il faut pour cela disposer d'une boucle fonctionnant en temps réel entre un dispositif de mesure du front d'onde et un dispositif de correction de front d'onde, le tout avec un temps de réponse de l'ordre de la milliseconde. En ce qui concerne la mesure de front d'onde, les analyseurs de Shack-Hartmann ont profité des progrès en micro-fabrication et sont maintenant majoritairement utilisés avec des caméras CCD ou CMOS. En ce qui concerne la correction de front d'onde, on dispose maintenant de miroirs déformables avec plusieurs centaines d'actuateurs et une vitesse suffisante pour corriger en temps réel les aberrations résultant des perturbations atmosphériques.

En parallèle, et à une autre échelle, la microscopie optique a aussi fait de grands progrès, tant dans la qualité des optiques avec des ouvertures numériques de plus en plus grandes, que dans les modalités d'imagerie, avec l'apparition de techniques de « coupes » virtuelles de champ d'observation : microscopie confocale, microscopie à illumination structurée, et microscopies non-linéaires. Ces techniques permettent d'obtenir des images des tissus en profondeur. On peut leur adjoindre, en ophtalmologie, l'OCT (Tomographie par cohérence optique, permettant de sélectionner le signal provenant d'une profondeur donnée en utilisant la cohérence de la source) qui est utilisée dans les cabinets médicaux de manière routinière pour obtenir des images 2D et 3D de la rétine. Dans tous ces cas, la lumière traverse des tissus d'indice varié ou des surfaces déformées et la qualité des images s'en trouve dégradée. Pourtant ce n'est que récemment que l'optique adaptative a été utilisée en imagerie biomédicale (voir par exemple M. J. Booth, Light Sci. Appl. 3, e165 (2014)).

S'il est possible dans certains cas de générer une « étoile artificielle » (comme en astronomie) en focalisant un laser à la surface de la rétine, mesurer un front d'onde issu de la profondeur d'un échantillon biologique est plus complexe que mesurer celui issu d'une étoile, en particulier parce qu'il résulte d'une superposition incohérente d'échos associés à des diffuseurs non résolus, formant une image dite de « speckle ».

Une seconde approche consiste à corriger les aberrations sans mesurer le front d'onde, mais uniquement en optimisant la qualité des images, c'est à dire en déformant le front d'onde de manière contrôlée pour converger vers une image optimale. L'inconvénient de ce type d'approche est le choix d'un critère pour converger vers une image optimisée.

Par ailleurs, les aberrations subies par un front d'onde diffèrent suivant les endroits de l'image. Ces zones, appelées domaines d'isoplanétisme et décrites par exemple dans l'article de J. Mertz et al. (« Field of view advantage of conjugate adaptive optics in microscopy applications », Appl. Opt. 54, 3498-3506, 2015) sont bien souvent impossibles à déterminer a priori. Une correction d'aberrations basée sur les techniques connues de l'état de l'art s'avère en général problématique lorsque le champ de vision (ou « field of view » ou « *FOV* ») contient plusieurs domaines d'isoplanétisme.

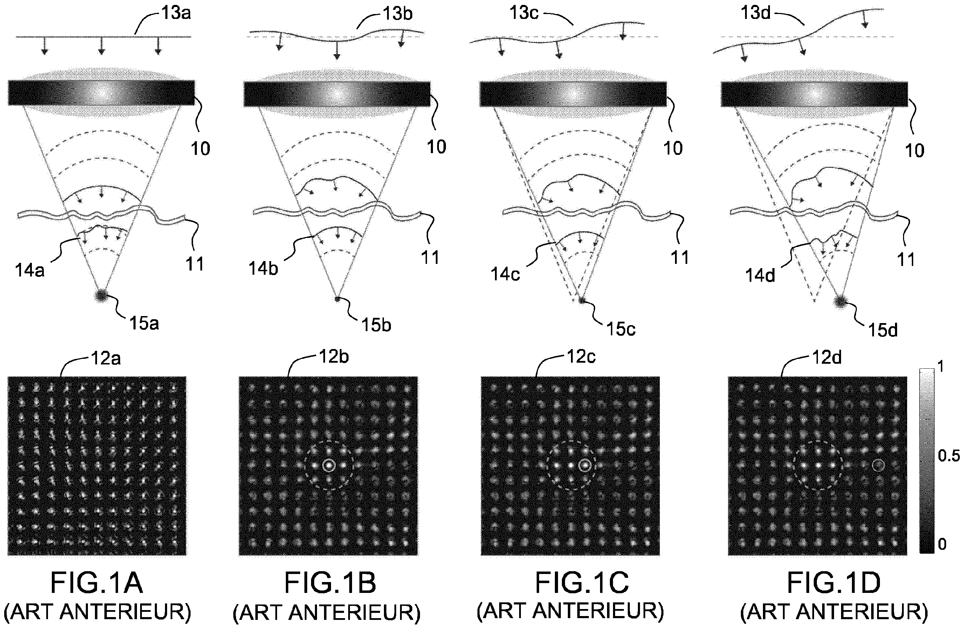

La notion de domaines d'isoplanétisme est illustrée sur les FIGS. 1A-1D. Imaginons un film aberrateur 11 placé entre un objectif de microscope 10 et un plan focal de l'objectif de microscope, le plan focal étant représenté pour chacune des FIGS 1A - 1D respectivement par les images 12a - 12d. Dans l'exemple de la FIG. 1A, le front d'onde 13a incident sur l'objectif de microscope n'est pas corrigé. Il est donc distordu après le film aberrateur (front d'onde 14a) ce qui se traduit par une tache focale 15a élargie par rapport à la limite de diffraction. Dans l'exemple de la FIG. 1B, le front d'onde incident 13b est corrigé - par exemple au moyen d'un système d'optique adaptative - de telle sorte que le front d'onde 14b en sortie de l'aberrateur soit parfaitement corrigé (onde sphérique). Il en résulte en un point r donné du plan focal une tache focale 15b limitée par diffraction. Si ce même front d'onde corrigé est légèrement angulé (13c, FIG. 1C) pour permettre une focalisation en un point $\mathbf{r'}$ tel que $|\mathbf{r} - \mathbf{r'}| < l_c$, où $l_c$ est un paramètre caractéristique de l'aberrateur, appelée longueur de cohérence de l'aberrateur, alors le front d'onde 14c issu de l'aberrateur reste corrigé et la focalisation est toujours limitée par la diffraction en **r'** (tache focale 15c). Les points **r** et **r'** appartiennent aux mêmes domaines d'isoplanétisme du champ de vision. Par contre, si le front d'onde incident corrigé est angulé davantage (13d, FIG. 1D) pour permettre une focalisation en un point **r'** tel que | **r** - **r'** | > $l_c$, alors le front d'onde 14d issu de l'aberrateur est distordu et la correction appliquée ne permet pas une focalisation limitée par la diffraction en **r'** (tache focale 15d). Les points **r** et **r'** appartiennent dans ce cas à des domaines d'isoplanétisme différents du champ de vision.

Dans le cadre de la présente description, une troisième voie est proposée qui ne repose ni sur la génération d'une étoile artificielle, ni sur une optimisation du front d'onde basée sur un critère quelconque de la qualité de l'image. La présente invention est basée sur une approche matricielle de l'imagerie optique et de la correction des aberrations.

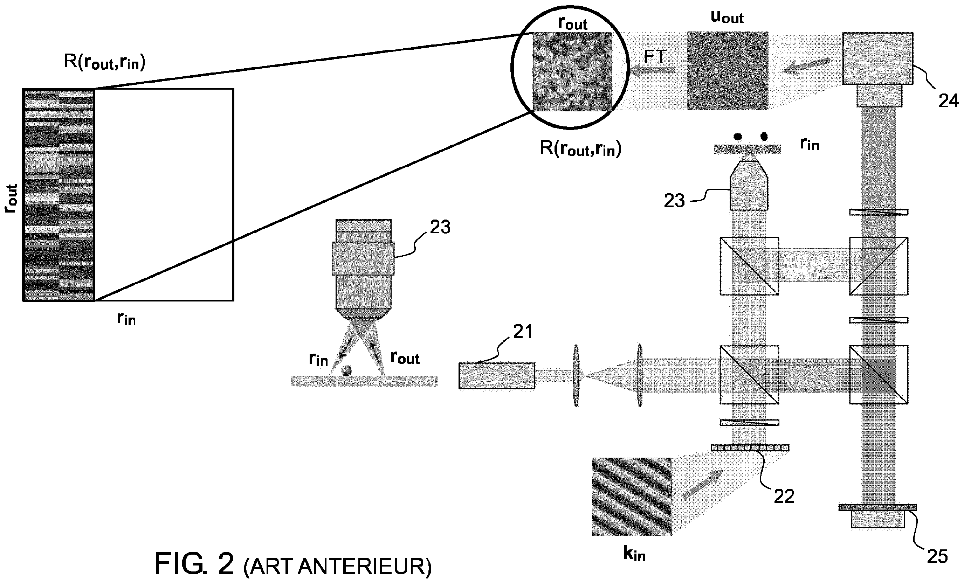

Une approche matricielle de la propagation des ondes lumineuses au sein des milieux hétérogènes a été développée tout d'abord en transmission, à des fins notamment de communication à travers des milieux fortement diffusants - voir article de S. M. Popoff et al. (Phys. Rev. Lett. 104, 100601, 2010). Récemment, l'approche matricielle a été utilisée pour l'imagerie en profondeur à travers les milieux fortement diffusants (voir A. Badon et al. « Smart optical cohérence tomography for ultra-deep imaging through highly scattering media », Sci. Adv. 2016; 2:e1600370). Cette approche, dénommée « smart OCT » dans l'article, comprend la détermination expérimentale d'une matrice de réflexion dans l'espace réel (ou matrice de réflexion « plan focal ») au moyen d'un montage expérimental dont un schéma est reproduit sur la FIG.2.

Un faisceau laser issu d'une source laser femtoseconde 21 est mis en forme spatialement par un modulateur spatial de lumière (SLM) 22 agissant comme un réseau de diffraction dynamique. Un ensemble d'ondes planes est alors émis par le SLM, les ondes planes étant focalisées en différents points de focalisation $\mathbf{r_{in}}$ du plan focal objet d'un objectif de microscope 23. Pour chaque point de focalisation $\mathbf{r_{in}}$, le champ réfléchi $E_r(\mathbf{u_{out}},\mathbf{r_{in}},t)$ est collecté au travers du même objectif de microscope 23 et interfère avec une onde de référence $E_0(\mathbf{u_{out}},\mathbf{0},t)$ sur un dispositif d'acquisition bidimensionnelle 24, par exemple une caméra CCD, conjuguée avec le plan pupille de l'objectif de microscope. La figure d'interférence entre ces deux ondes intégrée sur le temps $t$ donne accès aux coefficients $R(\mathbf{u_{out}}, \mathbf{r_{in}})$ d'une colonne de la matrice de réflexion $\mathbf{R_{ur}}$ fenêtrée temporellement :

$$ R(\mathbf{u_{out}}, \mathbf{r_{in}}) = \int dt \, E_r(\mathbf{u_{out}}, \mathbf{r_{in}}, t) \times E_0^*(\mathbf{u_{out}}, \mathbf{0}, t + \tau) $$

En pratique, l'amplitude et la phase de chaque coefficient $R(\mathbf{u_{out}},\mathbf{r_{in}})$ sont enregistrées par interférométrie à décalage de phase. Le temps de vol $\tau$ est contrôlé par la longueur du bras de référence de l'interféromètre au moyen d'un miroir 25 dont la position est ajustée par un actuateur piézoélectrique (PZT). Le temps de vol est ajusté au temps balistique pour la plupart des applications envisagées, de telle sorte à éliminer les photons multiplement diffusés et ne conserver que les photons simplement diffusés par les réflecteurs contenus dans le plan focal de l'échantillon. Pour chaque point $\mathbf{r_{in}}$ de focalisation en entrée dans le plan focal, le coefficient de réflexion $R(\mathbf{u_{out}},\mathbf{r_{in}})$ est enregistré dans un plan conjugué avec celui de la pupille de l'objectif de microscope en sortie (repéré par le vecteur $\mathbf{u_{out}}$). Une transformée de Fourier bidimensionnelle sur la coordonnée $\mathbf{u_{out}}$ permet de déterminer le coefficient de réflexion $R(\mathbf{r_{out}},\mathbf{r_{in}})$ dans un plan conjugué avec la plan focal en sortie repéré par le vecteur $\mathbf{r_{out}}$. Pour chaque point $\mathbf{r_{in}}$ de focalisation en entrée dans le plan focal, le coefficient de réflexion $R(\mathbf{r_{out}},\mathbf{r_{in}})$ est enregistré et stocké le long d'un vecteur colonne. Finalement, l'ensemble des vecteurs colonnes forme la matrice de réflexion $\mathbf{R_{rr}}$ dans le plan focal. On obtient ainsi une matrice de réflexion « plan focal » fenêtrée temporellement dont les éléments diagonaux ($\mathbf{r_{in}} = \mathbf{r_{out}}$) forment une coupe « en face » de l'image de l'échantillon telle qu'elle serait obtenue en OCT (pour une description de l'imagerie OCT plein champ, voir par exemple la demande de brevet publiée US20040061867). L'approche « smart OCT » consiste alors à appliquer un filtre à la matrice de réflexion plan focal de telle sorte à filtrer les éléments hors diagonaux de la matrice de réflexion principalement associés aux effets de diffusion multiple. Cette opération mathématique revient ainsi à réaliser numériquement une image confocale avec un trou virtuel de dimension ajustable déterminée en fonction de la largeur de la tâche focale aberrée et de la taille de la cible à imager. Une décomposition en valeurs singulières de la matrice filtrée résultante permet, par combinaison des premiers vecteurs singuliers d'entrée et de sortie, de reconstruire une image du plan focal dont on a ôté une grande part du bruit de diffusion multiple.

Ainsi, le « smart OCT » décrit dans l'article d'A. Badon *et al.* permet, par rapport aux techniques OCT et grâce à une discrimination matricielle des photons simplement et multiplement diffusés, de multiplier par 2 la profondeur de pénétration dans un milieu hautement diffusant. Cependant, l'approche développée jusque-là permet seulement la détection de cibles enfouies dans des milieux multiplement diffuseurs mais ne permet pas de corriger les aberrations introduites par le système optique ou le milieu lui-même, et encore moins d'imager un champ de vision contenant plusieurs domaines d'isoplanétisme. La publication «*Measuring large optical reflection matrices of turbid media",* Yu et al., Optics Communications, vol. 352, pages 33-38, 2015, décrit la mesure d'une matrice de réflexion en milieu turbide et en étudie les propriétés statistiques, la mesure comprenant une étape de calibration au moyen d'une matrice de réflexion mesurée à l'aide d'un miroir en lieu et place de l'échantillon. Cependant, la méthode de mesure décrite ne permet pas non plus de corriger les aberrations introduites par le système optique ou le milieu.

La présente invention présente une approche matricielle nouvelle pour l'imagerie optique et pour la correction simultanée des aberrations sur plusieurs domaines d'isoplanétisme du champ de vision.

RESUME

La présente description a pour objet, selon un premier aspect, un procédé de caractérisation optique non invasive d'un échantillon formé d'un milieu hétérogène, selon la revendication 1. Le procédé comprend les étapes suivantes :

- une étape d'illumination au moyen d'une série d'ondes lumineuses incidentes d'un champ de vision donné dudit milieu hétérogène, positionné dans un plan focal d'un objectif de microscope;
- une étape de détermination d'une première matrice distorsion dans une base d'observation définie entre un plan conjugué dudit plan focal et un plan d'observation, ladite première matrice distorsion correspondant, dans une base de correction définie entre un plan conjugué dudit plan focal et un plan de correction des aberrations, au produit matriciel terme à terme d'une première matrice de réflexion dudit champ de vision déterminée dans ladite base de correction, avec la matrice conjuguée en phase d'une matrice de réflexion de référence, définie pour un milieu modèle, dans ladite base de correction;
- une étape de détermination à partir de ladite première matrice distorsion, d'au moins une cartographie d'un paramètre physique dudit milieu hétérogène.

Chaque coefficient ou « élément » de la première matrice de réflexion correspond à un coefficient de réflexion complexe de l'échantillon déterminé en un point du plan de correction pour une illumination focalisée donnée. Il peut être obtenu par le terme d'interférence croisé entre l'onde réfléchie par l'échantillon pour ladite illumination focalisée et une onde de référence. Le produit matriciel terme à terme ou « produit d'Hadamard » de la première matrice de réflexion par la matrice conjuguée en phase de la matrice de réflexion de référence, revient à retrancher à la phase de chaque élément de la matrice de réflexion, la phase de l'élément correspondant d'une matrice de réflexion définie pour un milieu modèle. On retranche ainsi à la phase de chaque élément de la première matrice de réflexion une composante balistique attendue (définie par le milieu modèle), ce qui permet d'isoler une composante distordue pour chaque point d'illumination du champ de vision. Les déposants ont montré qu'une analyse de la matrice distorsion permet notamment de discriminer les domaines d'isoplanétisme contenus dans le champ de vision et de déterminer, dans le plan d'observation, une loi d'aberrations associée à chaque domaine d'isoplanétisme.

Le milieu modèle ou « milieu de référence » est par exemple un milieu homogène d'indice optique égal à l'indice effectif (ou indice moyen) du milieu de propagation. Suivant le degré de connaissance *a priori* du milieu de propagation, le milieu modèle pourra prendre des formes plus élaborées (e.g milieu multi-couches *etc.*).

Un milieu hétérogène au sens de la présente description comprend tout milieu présentant un indice optique spatialement inhomogène et réfléchissant une partie de l'onde lumineuse incidente. A titre d'exemple, ce milieu peut en particulier être constitué de couches d'indices optiques différents, y compris de couches d'air lorsqu'on cherche à observer par exemple un élément situé derrière un objet diffusant ; il peut s'agir de milieux biologiques tels que la peau, la rétine ou des tissus résultant d'une biopsie, mais aussi d'autres milieux qui peuvent être examinés en microscopie, par exemple en métallographie (pièce de métal) ou en pétrographie (analyse des roches). Les procédés et systèmes décrits dans la présente description permettent notamment une caractérisation optique non invasive en profondeur d'un tel milieu hétérogène.

Un paramètre physique du milieu hétérogène peut comprendre par exemple : des lois d'aberrations associées à chaque domaine d'isoplanétisme contenu dans le champ de vision («*FOV*»), un paramètre caractéristique de la réflectivité optique du milieu, un paramètre caractéristique de l'indice de réfraction du milieu ou un taux de diffusion multiple.

Les aberrations d'un front d'onde se propageant à travers un milieu et/ou un système optique correspondent à l'écart entre le front d'onde issu de ce milieu et /ou système optique et celui qui serait attendu dans un cas idéal. Ces aberrations peuvent être liées par exemple aux imperfections du système optique d'imagerie (par exemple aberration sphérique, coma, astigmatisme etc.). Dans le cadre de la présente description, sont visées principalement les aberrations induites par le milieu de propagation lui-même, i.e. par des fluctuations spatiales de son indice de réfraction optique.

Le plan d'observation est par exemple le plan de correction des aberrations, par exemple lorsqu'on cherche une cartographie des lois d'aberrations. Le plan de correction des aberrations peut être un plan conjugué avec le plan pupille de l'objectif de microscope ou un plan conjugué avec le plan de l'aberrateur lorsque celui-ci peut être considéré comme un écran de phase bidimensionnel. Dans un cas plus général, on cherche à trouver un plan de correction maximisant la taille des domaines d'isoplanétisme contenus dans le champ de vision. Le plan d'observation peut être également un plan conjugué avec le plan focal, lorsqu'on cherche à dresser une carte de la fonction d'étalement du point du système d'imagerie (ou réponse impulsionnelle spatiale du système d'imagerie), ou une carte du taux de diffusion multiple.

Les déposants ont montré que la matrice distorsion peut comprendre une étape préalable de détermination de ladite première matrice de réflexion, ou être obtenue directement au moyen de montages expérimentaux particuliers.

Ainsi, selon un ou plusieurs exemples de réalisation, la détermination de la première matrice distorsion comprend une étape préalable de détermination de ladite première matrice de réflexion dans la base d'observation (matrice de réflexion fenêtrée temporellement ou déterminée dans le domaine fréquentiel) puis la construction de ladite première matrice distorsion à partir de ladite première matrice de réflexion et de ladite matrice de réflexion de référence définie dans la même base.

Selon un ou plusieurs exemples de réalisation, la base d'observation est la base de correction, et la première matrice distorsion est construite par le produit matriciel terme à terme de ladite première matrice de réflexion dudit champ de vision déterminée dans la base de correction avec la matrice conjuguée en phase de la matrice de réflexion de référence définie dans la même base. Il est possible selon un exemple de déterminer expérimentalement la première matrice de réflexion dans une base différente de la base de correction puis de déterminer la matrice de réflexion dans la base de correction, par simple changement de base

Selon un ou plusieurs exemples de réalisation, la base d'observation est une base « plan focal » définie entre deux plans conjugués du plan focal, et ladite première matrice distorsion est construite par la corrélation spatiale entre chaque ligne et/ou colonne de la matrice de réflexion "plan focal" définie dans ladite base « plan focal » et la même ligne et/ou colonne de la matrice de réflexion de référence définie dans la même base.

Selon un ou plusieurs exemples de réalisation, le milieu de référence est un milieu homogène d'indice optique égal à l'indice effectif (ou indice moyen) du milieu de propagation. La matrice de réflexion de référence peut être établie théoriquement pour ce milieu de référence avec un miroir plan dans le plan focal de l'objectif de microscope. Suivant le degré de connaissance *a priori* du milieu de propagation, le milieu de référence pourra prendre des formes plus élaborées (e.g milieu multi-couches *etc*.). Dans ce cas, la matrice de référence pourra être calculée numériquement. La construction de la matrice distorsion revient à soustraire à la phase de chaque élément de la première matrice de réflexion mesurée, la phase de l'élément correspondant de la matrice de réflexion de référence.

Selon un ou plusieurs exemples de réalisation, la détermination de ladite première matrice distorsion est obtenue *directement,* sans détermination préalable d'une matrice de réflexion.

Selon un ou plusieurs exemples de réalisation, la détermination de ladite première matrice distorsion est réalisée expérimentalement au moyen d'au moins un premier interféromètre éclairé en lumière cohérente. Le procédé est alors caractérisé en ce que :

- ladite étape d'illumination comprend l'illumination d'un bras objet et d'un bras de référence du premier interféromètre au moyen d'ondes lumineuses identiques, cohérentes spatialement, le bras objet comprenant l'objectif de microscope dans le plan focal duquel se trouve ledit milieu hétérogène et le bras de référence comprenant un miroir de référence;
- ladite première matrice distorsion est déterminée dans ladite base de correction et la détermination de la première matrice distorsion comprend les étapes suivantes :

   o Pour chaque onde lumineuse incidente en un point du plan focal, l'acquisition dans ledit plan de correction d'un interférogramme résultant de l'interférence entre le champ électromagnétique réfléchi par ledit point et le champ électromagnétique réfléchi par le miroir de référence ;
   ○ La construction de ladite première matrice distorsion, chaque colonne de la première matrice distorsion correspondant, pour une onde lumineuse incidente focalisée en un point du plan focal, au champ électromagnétique associé au terme d'interférence croisé dudit interférogramme.

Du fait de l'illumination du bras objet et du bras de référence avec les mêmes ondes lumineuses incidentes, les déposants ont montré que le champ électromagnétique associé au terme d'interférence croisé de l'interférogramme ainsi obtenu est directement associée à la composante distordue du champ électromagnétique réfléchi. Le milieu de référence peut être de l'air, ou un milieu plus complexe, obtenu par exemple par introduction d'un gel sur le bras de référence. Ledit premier interféromètre est par exemple un interféromètre de Linnik avec deux objectifs sur chacun des bras, avantageusement deux objectifs identiques. La détermination du terme d'interférence croisé de l'interférogramme est par exemple obtenue par interférométrie à décalage de phase. Ainsi, chaque colonne de la première matrice distorsion correspond, pour une onde lumineuse incidente focalisée en un point du plan focal, au terme d'interférence croisé d'un interférogramme mesuré dans le plan d'observation et résultant de l'interférence entre le champ électromagnétique réfléchi par ledit point dans le bras objet et le champ électromagnétique réfléchi par un point conjugué au dit point sur le miroir de référence. Le plan de correction est par exemple un plan conjugué dudit plan de la pupille de sortie de l'objectif de microscope. Un balayage du plan focal permet de reconstruire l'ensemble de la matrice distorsion.

Selon un ou plusieurs exemples de réalisation, ladite première matrice distorsion est déterminée expérimentalement par interférométrie à faible cohérence plein champ dans une base dite « focalisée » ou « plan focal » définie entre deux plans conjugués dudit plan focal. Le procédé est alors caractérisé en ce que :

- ladite étape d'illumination comprend l'illumination plein champ d'un bras objet et d'un bras de référence d'un premier interféromètre au moyen d'ondes lumineuses incohérentes spatialement, le bras objet comprenant l'objectif de microscope dans le plan focal duquel se trouve ledit milieu hétérogène et le bras de référence comprenant un miroir de référence, les ondes réfléchies par le milieu hétérogène et le miroir de référence en sortie du premier interféromètre présentant un décalage spatial dans un plan conjugué avec le plan focal, le décalage étant variable;
- ladite première matrice distorsion est déterminée dans une base « plan focal » définie entre deux plans conjugués du plan focal et la détermination de ladite première matrice distorsion comprend les étapes suivantes :

   o Pour chaque décalage spatial, l'acquisition dans un plan conjugué du plan focal d'un interférogramme résultant de l'interférence entre lesdites ondes réfléchies par le milieu hétérogène et le miroir de référence et décalées spatialement ;
   ◦ la construction de ladite première matrice distorsion, chaque ligne de la première matrice distorsion correspondant, pour une valeur de décalage spatial, au champ électromagnétique associé au terme d'interférence croisé dudit interférogramme.

Les déposants ont montré que chaque ligne de la dite première matrice distorsion ainsi déterminée est une sous-diagonale de la matrice de réflexion « plan focal ». Il est ainsi possible de déterminer une matrice distorsion sous éclairage incohérent et sans balayage du plan focal.

Selon un ou plusieurs exemples de réalisation, la détermination d'au moins une cartographie d'un paramètre physique dudit milieu hétérogène comprend :

- la détermination des invariants dans ledit plan focal de ladite première matrice distorsion, afin d'identifier au moins un premier domaine d'isoplanétisme dans ledit plan focal ;
- la détermination pour chaque premier domaine d'isoplanétisme identifié, d'une cartographie d'une première loi d'aberration dans le plan de correction des aberrations.

Le plan de correction de la base de correction dans laquelle est définie ladite première matrice distorsion est alors avantageusement un plan maximisant la taille des domaines d'isoplanétisme contenus dans le champ de vision, par exemple un plan conjugué avec le plan d'un aberrateur si celui-ci est bidimensionnel, ou par exemple un plan conjugué avec un plan pupille de l'objectif de microscope. La première matrice distorsion peut être obtenue directement dans ladite base d'observation ou par changement de base à partir d'une matrice distorsion déterminée dans une autre base, par exemple une matrice distorsion « plan focal ».

Plusieurs méthodes connues peuvent être mises en oeuvre pour déterminer les invariants de la première matrice distorsion. Selon un ou plusieurs exemples de réalisation, la détermination des invariants dans ledit plan focal de ladite première matrice distorsion comprend une décomposition en valeurs singulières de ladite première matrice distorsion, une décomposition en valeurs singulières de ladite première matrice distorsion normalisée, c'est à dire dont le module de chacun des éléments aura été normalisé mais dont la phase aura été préservée, ou une décomposition en valeurs singulières d'une matrice de corrélation normalisée de ladite première matrice distorsion, c'est-à-dire une matrice de corrélation de ladite première matrice distorsion dont le module de chacun des éléments aura été normalisé.

Dans l'hypothèse d'une réflexion spéculaire par le milieu hétérogène, ce qui est souvent le cas aux fréquences optiques, les déposants ont montré qu'une cartographie de la réflectivité du milieu hétérogène pour l'ensemble du champ de vision peut être obtenue par une combinaison linéaire des vecteurs singuliers de ladite première matrice distorsion.

Les déposants ont également montré que la décomposition en valeurs singulières de la matrice distorsion permet de filtrer le sous-espace bruit (matrice aléatoire sans corrélation entre ses lignes et colonnes) du sous-espace signal (matrice caractérisée par d'importantes corrélations entre ses lignes et/ou ses colonnes), le sous-espace bruit contenant à la fois le bruit expérimental et la contribution incohérente du champ réfléchi induit par les évènements de diffusion multiple se produisant en amont du plan focal.

Selon un ou plusieurs exemples de réalisation, le procédé selon la présente description comprend en outre une détermination de la fonction d'étalement du point du système d'imagerie. La fonction d'étalement du point du système d'imagerie (ou réponse impulsionnelle ou « PSF » selon l'abréviation de l'expression anglo-saxonne « Point Spread Function ») correspond à la transformée de Fourier spatiale de la loi d'aberration mesurée dans le plan pupille. Elle est invariante spatialement sur chaque domaine d'isoplanétisme. Elle peut être obtenue selon un exemple à partir de la décomposition en valeurs singulières de la matrice distorsion « plan focal ».

Selon un ou plusieurs exemples de réalisation, le procédé selon la présente description comprend en outre la détermination dans ladite base d'observation d'une première matrice de réflexion dudit champ de vision corrigée par la ou lesdites première(s) loi(s) d'aberration. Cela permet, notamment dans l'hypothèse d'une réflexion diffuse par l'échantillon, de déterminer une cartographie de la réflectivité du milieu, ou « image », corrigée des aberrations.

Sur la base de ladite première matrice de réflexion corrigée du champ de vision, il est possible selon un ou plusieurs exemples de réalisation, de déterminer une deuxième matrice distorsion. La deuxième matrice distorsion correspond, dans ladite base de correction, au produit matriciel terme à terme de ladite matrice de réflexion corrigée déterminée dans ladite base de correction, avec la matrice conjuguée en phase de ladite matrice de réflexion de référence. La deuxième matrice distorsion permet par détermination de ses invariants dans le plan focal d'affiner la correction dans le premier domaine d'isoplanétisme identifié. Elle permet également d'identifier au moins un deuxième domaine d'isoplanétisme dans ledit plan focal et de déterminer pour chaque deuxième domaine d'isoplanétisme identifié, une cartographie d'une deuxième loi d'aberration dans ledit plan de correction. Le procédé peut être ainsi itéré autant de fois que nécessaire suivant le nombre de domaines d'isoplanétisme contenu dans le champ de vision pour obtenir une cartographie de la réflectivité du milieu, ou « image », corrigée des aberrations. Ce procédé itératif s'applique plus particulièrement dans l'hypothèse d'une réflexion diffuse ou intermédiaire, c'est-à-dire une réflexion mixte spéculaire et diffuse.

Selon un ou plusieurs exemples de réalisation, le procédé selon la présente description comprend en outre l'identification et/ou la suppression de la composante spéculaire du champ réfléchi et/ou des réflexions multiples induites entre les différentes interfaces du milieu hétérogène. A cette fin, la matrice distorsion peut être projetée dans le plan de Fourier à la fois en entrée et en sortie. Dans cette base, les composantes spéculaires et multiplement réfléchies du champ apparaissent pour des couples d'angles incident et réfléchi précis. Elles peuvent donc être aisément filtrées et seule la composante diffuse (speckle) du champ réfléchi est conservée. Cette discrimination de la composante diffuse permet ensuite d'accéder directement aux lois d'aberration à appliquer en entrée et sortie pour corriger la matrice de réflexion et obtenir une image optimale du milieu. Si la composante spéculaire prédomine, on n'a en effet accès qu'aux lois d'aberration cumulées à l'aller par l'onde incidente et au retour par l'onde réfléchie, ce qui empêche une correction optimale de la composante diffuse de l'objet. En outre, le filtrage de la matrice distorsion dans le plan de Fourier permet d'éliminer les réflexions multiples entre interfaces qui peuvent polluer les images de tomographie à cohérence optique.

Selon un deuxième aspect, la présente description concerne des systèmes pour la mise en oeuvre d'un ou plusieurs exemples de réalisation d'un procédé de caractérisation optique non invasive d'un milieu hétérogène selon le premier aspect.

Notamment, la présente description concerne des systèmes permettant une détermination directe de la première matrice distorsion, sans détermination préalable de la première matrice réflexion, au moyen d'un montage interférométrique adapté.

Ainsi, selon un ou plusieurs exemples de réalisation, la présente description concerne un système de caractérisation optique non invasive d'un milieu hétérogène selon la revendication 13. Le procédé comprend les étapes suivantes :

- un premier objectif de microscope définissant un plan focal dans lequel est destiné à être positionné ledit milieu hétérogène ;
- un dispositif d'émission lumineuse pour l'émission d'une série d'ondes lumineuses incidentes, destinées à l'illumination à travers ledit objectif de microscope d'un champ de vision donné dudit milieu hétérogène ;
- un détecteur d'acquisition bidimensionnel agencé dans un plan d'observation;
- un premier interféromètre couplé au dispositif d'émission lumineuse et au détecteur d'acquisition bidimensionnel, comprenant un bras objet avec ledit objectif de microscope et un bras de référence comprenant un miroir de référence au foyer d'un deuxième objectif de microscope, ledit premier interféromètre étant configuré pour former au niveau dudit plan d'observation des interférences entre des ondes réfléchies par le milieu hétérogène et ledit miroir de référence,
- une unité de calcul, couplée au détecteur d'acquisition bidimensionnel, et configurée pour

  ◦ déterminer, à partir des interférogrammes résultant desdites interférences, une première matrice distorsion dans une base d'observation définie entre un plan conjugué dudit plan focal et ledit plan d'observation, ladite première matrice distorsion correspondant, dans une base de correction définie entre un plan conjugué dudit plan focal et un plan de correction des aberrations, au produit matriciel terme à terme d'une première matrice de réflexion dudit champ de vision déterminée dans ladite base de correction, avec la matrice conjuguée en phase d'une matrice de réflexion de référence, définie pour un milieu modèle, dans ladite base de correction;
  ◦ déterminer à partir de ladite première matrice distorsion, au moins une cartographie d'un paramètre physique dudit milieu hétérogène.

Selon un ou plusieurs exemples de réalisation, le dispositif d'émission lumineuse est configuré pour l'illumination dudit bras objet et dudit bras de référence au moyen d'ondes lumineuses identiques, cohérentes spatialement.

Selon cet exemple, le plan d'observation est un plan de correction des aberrations et le dispositif d'acquisition bidimensionnel est configuré pour l'acquisition, dans ledit plan de correction, et pour chaque onde lumineuse incidente en un point du plan focal, d'un interférogramme résultant de l'interférence entre le champ électromagnétique réfléchi par ledit point et le champ électromagnétique réfléchi par le miroir de référence. L'unité de calcul est configurée pour la construction de ladite première matrice distorsion, chaque colonne de la première matrice distorsion correspondant, pour une onde lumineuse incidente focalisée en un point du plan focal, au champ électromagnétique associé au terme d'interférence croisé dudit interférogramme.

Selon un ou plusieurs exemples de réalisation, le dispositif d'émission lumineuse est configuré pour l'illumination de l'ensemble du champ de vision (illumination « plein champ ») sur lesdits bras objet et de référence au moyen d'ondes lumineuses incohérentes spatialement.

Selon cet exemple, le système est configuré pour former, en sortie dudit premier interféromètre, des ondes réfléchies par ledit milieu hétérogène et ledit miroir de référence, cohérentes entre elles, et présentant un décalage spatial dans un plan conjugué avec le plan focal, le décalage étant variable. Le plan d'observation est un plan conjugué avec le plan focal et le dispositif d'acquisition bidimensionnel est configuré pour l'acquisition, dans ledit plan d'observation, et pour chaque décalage spatial, d'un interférogramme résultant de l'interférence entre lesdites ondes réfléchies par le milieu hétérogène et le miroir de référence et décalées spatialement. L'unité de calcul est configurée pour la construction de ladite première matrice distorsion, chaque ligne de la première matrice distorsion correspondant, pour une valeur de décalage spatial, au champ électromagnétique associé au terme d'interférence croisé dudit interférogramme.

Un tel système permet, par rapport à un système avec illumination cohérente, de s'affranchir d'un balayage du champ de vision.

Les déposants ont développé plusieurs systèmes permettant de réaliser le décalage spatial variable entre les ondes réfléchie et de référence.

Ainsi, selon un premier exemple de réalisation, ledit premier interféromètre comprend un premier séparateur de faisceau configuré pour former lesdits bras objet et de référence. Le bras de référence comprend un deuxième séparateur de faisceau configuré pour envoyer lesdites ondes d'illumination sur ledit miroir de référence et sur un deuxième miroir, ledit deuxième miroir étant agencé dans un plan conjugué avec un plan pupille dudit objectif de microscope, et présentant une inclinaison variable par rapport à un axe optique défini par l'axe optique de l'objectif de microscope; le bras objet comprend un troisième séparateur de faisceau configuré pour envoyer lesdites ondes d'illumination sur ledit milieu hétérogène et sur un troisième miroir, ledit troisième miroir étant agencé dans un plan conjugué avec un plan pupille dudit objectif de microscope, perpendiculairement à un axe optique défini par l'axe optique de l'objectif de microscope. Ledit premier interféromètre comprend un quatrième séparateur de faisceau configuré pour combiner les ondes réfléchies par le milieu hétérogène et le miroir de référence, issues des bras objet et de référence.

Selon un deuxième exemple de réalisation, le système de caractérisation optique comprend en outre un deuxième interféromètre illuminateur configuré pour recevoir lesdites ondes lumineuses incohérentes spatialement issues du dispositif d'émission lumineuse et former deux ondes d'illumination polarisées de polarisations orthogonales et présentant un décalage spatial dans un plan conjugué avec le plan focal ; ledit premier interféromètre comprend alors un élément séparateur de polarisation configuré pour envoyer respectivement sur les bras objet et de référence, chacune desdites ondes polarisées de polarisations orthogonales et présentant un décalage spatial.

Les polarisations orthogonales peuvent être rectilignes, circulaires ou toute autre polarisation permettant de former deux polarisations orthogonales.

Un tel système est avantageux en ce qu'il permet de régler séparément les deux interféromètres, ce qui confère une plus grande facilité d'utilisation.

BREVE DESCRIPTION DES FIGS.

D'autres avantages et caractéristiques de la technique présentée ci-dessus apparaîtront à la lecture de la description détaillée ci-dessous, faite par référence aux FIGS. dans lesquelles :

- les FIGS. 1A - 1D (déjà décrites) illustrent de manière schématique la notion de domaines d'isoplanétisme ;
- la FIG. 2 (déjà décrite) représente de manière schématique un système expérimental pour l'imagerie à travers les milieux diffusants, selon l'art antérieur;
- la FIG. 3A représente un schéma simplifié d'un système selon la présente description permettant d'introduire les différentes notations et la FIG. 3B un schéma illustrant la convention utilisée pour la représentation de matrices à 4 dimensions ;
- les FIGS. 4 et 5A - 5D représentent des schémas expliquant le concept de matrice distorsion ;
- les FIGS. 6A à 6C illustrent respectivement (FIG. 6A) un premier exemple de matrice de réflexion dans le cas d'un échantillon induisant une réflexion spéculaire et pour un défaut de mise au point (un seul domaine d'isoplanétisme), (FIG. 6B) la matrice de réflexion plan focal correspondante et un exemple de fonction d'étalement obtenue à partir de la matrice de réflexion plan focal, et (FIG. 6C) une matrice distorsion obtenue à partir de la matrice de réflexion de la FIG. 6A;

- les FIGS. 7A à 7C illustrent respectivement le spectre des valeurs singulières normalisées de la matrice distorsion montrée sur la FIG. 6C, la cartographie de la phase du premier vecteur propre de sortie ($U_1$) et la cartographie du module du premier vecteur propre d'entrée ($V_1$);
- les FIGS. 8A - 8D illustrent respectivement (FIGS. 8A, 8B) les matrices de réflexion plan focal avant et après correction et (FIGS. 8C, 8D) les images confocales déduites des deux matrices, pour le même exemple que celui illustré au moyen des FIGS. 6A - 6C (un seul domaine d'isoplanétisme) ;

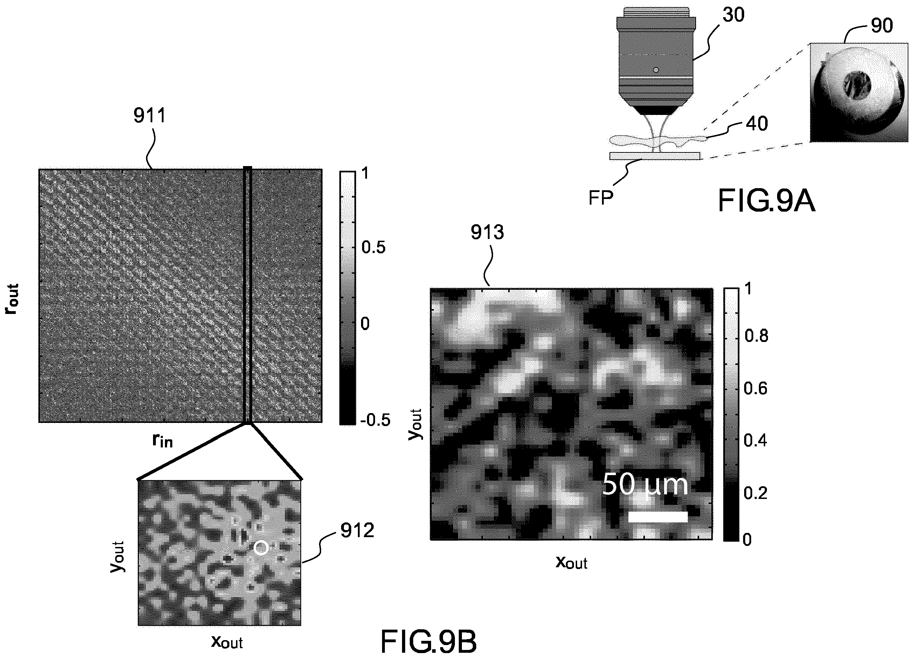

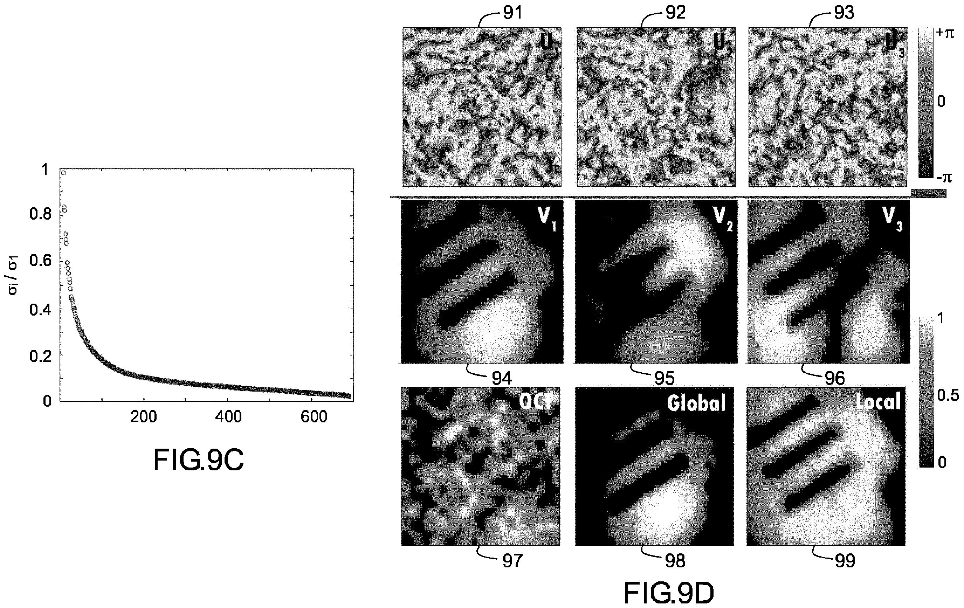

- les FIGS. 9A - 9D illustrent un deuxième exemple d'utilisation de la matrice distorsion (cas de plusieurs domaines d'isoplanétisme) et plus précisément, FIG. 9A, un schéma du montage expérimental, FIG. 9B, la matrice de réflexion plan focal mesurée et des exemples de tache focale et d'image confocale extraits de la matrice de réflexion plan focal ; FIG. 9C, le spectre des valeurs singulières normalisées de la matrice distorsion correspondant à la matrice de réflexion mesurée et la FIG. 9D, des cartographies de la phase des vecteurs propre de sortie ($U_i$), des cartographies du module des vecteurs propre d'entrée ($V_i$) , une image OCT conventionnelle, une image obtenue par optique adaptative, et une image obtenue au moyen d'une combinaison des dits vecteurs propres d'entrée ;

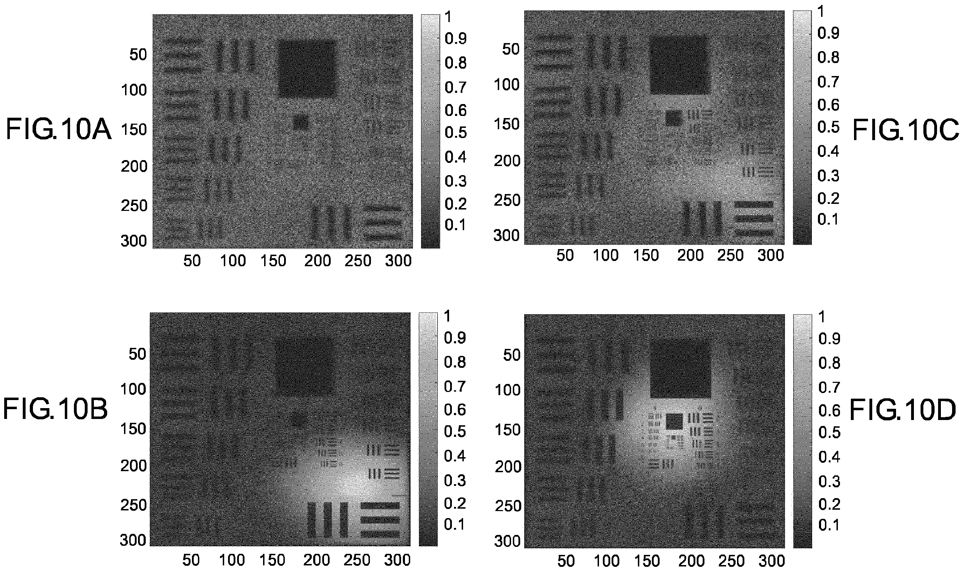

- les FIGS. 10A -10D, illustrent des résultats obtenus à partir d'une simulation numérique de la matrice distorsion dans le cas d'une mire de résolution à phase aléatoire (réflexion diffuse) imagée à travers un aberrateur ; ainsi, la FIG. 10A montre l'image confocale de l'objet suivant l'état de l'art, la FIG. 10B représente l'image corrigée à partir du premier vecteur propre $U_1$ de la matrice distorsion, les FIGS. 10C-D présentent les images obtenues après itération de la correction à partir des deux premiers vecteurs propres, $U_1^{(1)}$ et $U_2^{(1)}$ , de la matrice de corrélation normalisée de $D^{(1)}$ ;

- les FIGS. 11A, 11B illustrent schématiquement un premier exemple d'un système de caractérisation selon la présente description (éclairage cohérent) ;
- les FIGS. 12, 13 illustrent d'autres exemples de systèmes de caractérisation selon la présente description (éclairage incohérent) ;
- les FIGS. 14A, 14B représentent une matrice distorsion (FIG. 14B) obtenue expérimentalement au moyen d'un montage expérimental du type de la FIG. 12 pour un échantillon (mire de résolution) observé à travers une cornée malade (FIG. 14A) ;
- les FIGS. 15A - 15E d'une part et 16A - 16E d'autre part, illustrent l'exploitation de la matrice distorsion montrée sur la FIG. 14B pour l'obtention d'une image corrigée ;
- les FIGS. 17A - 17D illustrent l'application de la méthode selon la présente description à l'imagerie en profondeur d'un milieu biologique dans un régime mixte spéculaire et diffus (montage expérimental du type de la FIG. 13).

Dans les différents modes de réalisation qui vont être décrits par référence aux figures, des éléments semblables ou identiques portent les mêmes références.

DESCRIPTION DETAILLEE

Dans la description détaillée qui suit, seuls certains modes de réalisation sont décrits en détail pour assurer la clarté de l'exposé mais ces exemples ne visent pas à limiter la portée générale des principes ressortant de la présente description.

Lorsque dans la présente description, il est fait référence à des étapes de calcul ou traitement pour la mise en oeuvre notamment d'étapes de procédés, il est entendu que chaque étape de calcul ou traitement peut être mis en oeuvre par logiciel, hardware, firmware, microcode ou toute combinaison appropriée de ces technologies. Lorsqu'un logiciel est utilisé, chaque étape de calcul ou traitement peut être mise en oeuvre par des instructions de programme d'ordinateur ou du code logiciel. Ces instructions peuvent être stockées ou transmises vers un support de stockage lisible par un ordinateur (ou unité de calcul) et/ou être exécutées par un ordinateur (ou unité de calcul) afin de mettre en oeuvre ces étapes de calcul ou traitement.

**(Définition de la matrice distorsion)**

La présente description décrit des procédés et systèmes de caractérisation optique non invasive d'un échantillon hétérogène, placé dans le plan focal d'un objectif de microscope. Ces procédés et systèmes sont basés sur la détermination d'au moins une première matrice appelée « matrice distorsion » dans la suite de la description.

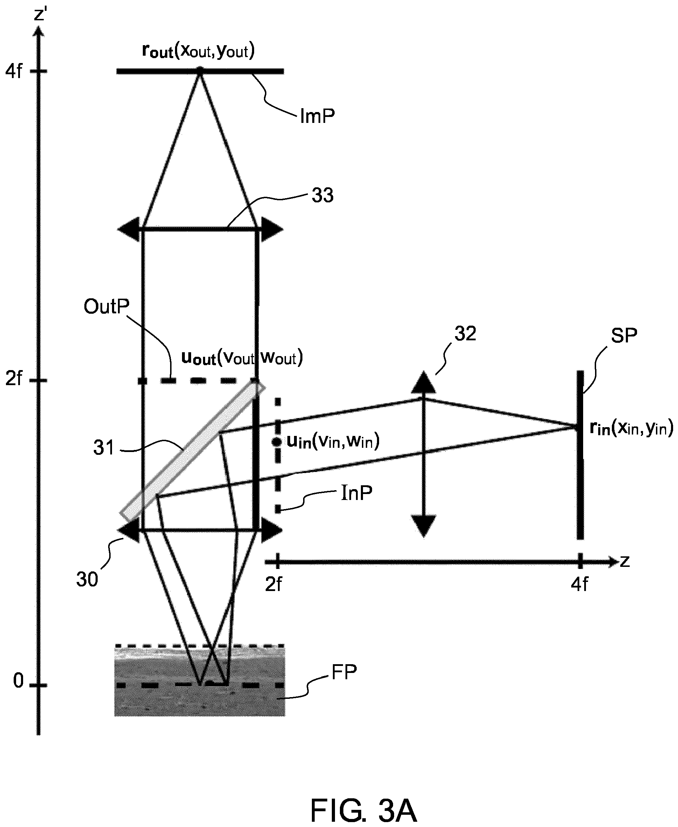

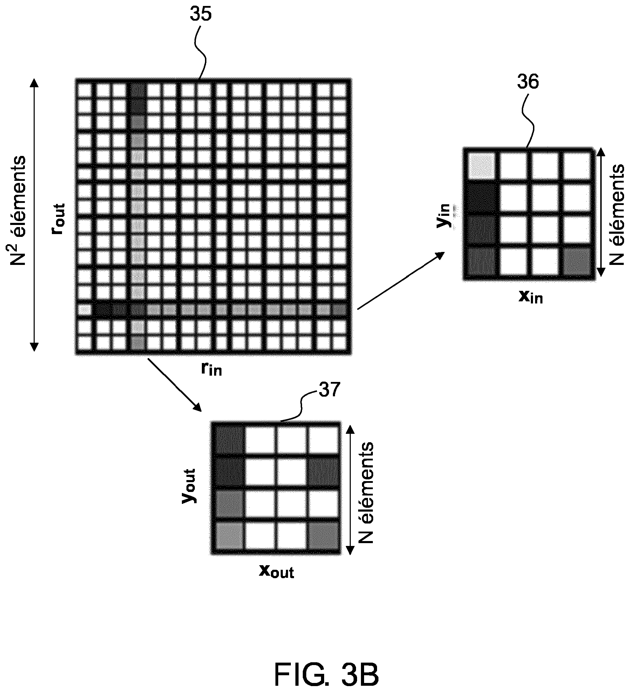

Les notations utilisées dans la présente description pour identifier les différents plans du système optique utilisé pour la caractérisation de l'échantillon sont définies au moyen de la FIG. 3 qui n'illustre que quelques-uns des éléments du système par souci de simplification.

Ainsi, le plan focal de l'objectif de microscope 30 est référencé FP et est destiné à recevoir l'échantillon. On note $r$ un point du plan focal FP, défini par ses coordonnées cartésiennes $(x, y)$. On note InP le plan de la pupille d'entrée de l'objectif de microscope ou tout plan conjugué avec le plan de la pupille d'entrée de l'objectif de microscope. La pupille d'entrée est destinée à recevoir les ondes lumineuses incidentes pour l'illumination d'un champ de vision de l'échantillon que l'on cherche à caractériser. On note $u_{in}$ un point du plan de la pupille d'entrée InP, défini par ses coordonnées cartésiennes $(v_{in}, w_{in})$. On note OutP le plan de la pupille de sortie de l'objectif de microscope ou tout plan conjugué avec le plan de la pupille de sortie de l'objectif de microscope. La pupille de sortie est destinée à recevoir les ondes lumineuses réfléchies par le champ de vision de l'échantillon que l'on cherche à caractériser. On note $u_{out}$ un point du plan de la pupille de sorte OutP, défini par ses coordonnées cartésiennes $(v_{out}, w_{out})$. Les voies d'entrée et de sortie comprenant respectivement les pupilles d'entrée et de sortie sont séparées dans cet exemple par un élément séparateur de faisceau 31. Sur la voie d'entrée, on note SP le plan source du système optique, conjugué avec le plan focal de l'objectif de microscope, dans cet exemple au moyen d'une optique 32 formant avec l'objectif de microscope 30 un montage 4f. On note $r_{in}$ un point du plan source SP, défini par ses coordonnées cartésiennes $(x_{in}, y_{in})$. Sur la voie de sortie, on note ImP le plan image du système optique, conjugué avec le plan focal de l'objectif de microscope, dans cet exemple au moyen d'une optique 33 formant avec l'objectif de microscope 30 un montage 4f. On note $r_{out}$ un point du plan image ImP, défini par ses coordonnées cartésiennes $(x_{out}, y_{out})$.

La matrice distorsion correspond, dans une base de correction définie entre un plan conjugué dudit plan focal et un plan de correction des aberrations, au produit matriciel terme à terme d'une matrice de réflexion dudit champ de vision déterminée dans ladite base de correction, avec la matrice conjuguée en phase d'une matrice de réflexion de référence, définie pour un milieu modèle, dans ladite base de correction.

Expérimentalement, la matrice de réflexion peut être mesurée de façon active, comme expliqué en référence à la FIG. 2 de l'état de l'art, en utilisant à l'émission un modulateur spatial de lumière (SLM) éclairé par une source de lumière cohérente spatialement. Le terme d'interférence croisé entre le champ réfléchi par l'échantillon dans le plan d'observation et un champ de référence peut alors être mesuré sur une caméra CCD ou CMOS au moyen de techniques interférométriques (méthode de "décalage de phase à quatre images", holographie hors axe, etc.). La matrice de réflexion correspond ainsi dans ce cas à l'ensemble des réponses impulsionnelles entre chaque pixel du SLM et chaque pixel de la caméra.

A noter qu'il est également possible de former les interférogrammes dans le domaine fréquentiel (à l'aide d'un spectromètre couplé à une caméra CCD ou CMOS, par exemple). On peut alors mesurer la matrice de réflexion dans le domaine de Fourier puis reconstruire la matrice de réflexion pour chaque profondeur dans le milieu par sommation sur une bande spectrale donnée. Dans ce cas, le balayage en profondeur de l'échantillon est obtenu en recombinant les matrices obtenues à différentes fréquences plutôt que par une translation motorisée de l'échantillon suivant l'axe optique.

La matrice distorsion peut être alors calculée numériquement à partir de la matrice de réflexion. Cependant, comme cela sera décrit plus en détails dans la suite, la matrice distorsion peut également être déterminée expérimentalement directement, sans détermination préalable de la matrice de réflexion.

Par ailleurs, la matrice de réflexion et/ou la matrice distorsion peuvent être mesurées et étudiées entre différents plans du montage optique, et dans la suite de la description, on fera référence à la matrice de réflexion et/ou distorsion quelle que soit la base utilisée. Ainsi, la matrice de réflexion et/ou distorsion peut être définie par exemple dans le plan pupille à l'émission (InP) et le plan pupille à la réception (OutP), ou des plans conjugués, si le SLM et la caméra CCD ont leurs surfaces conjuguées avec la pupille de l'objectif de microscope à travers lequel on cherche à imager l'échantillon. La matrice de réflexion et/ou distorsion peut également être définie entre des plans source (SP) et récepteur (ImP) conjugués avec le plan de l'objet à imager. Enfin, la matrice de réflexion et/ou distorsion peut relier des plans dits « réciproques » : plan pupille à l'émission et plan conjugué avec le plan de l'objet à la réception et vice versa. Dans la présente description, on pourra utiliser l'une ou l'autre de ces bases, le passage d'un plan à l'autre pouvant être réalisé par des opérations matricielles comprenant de simples transformées de Fourier spatiales discrètes.

Notons également que, dans la présente description, les matrices de réflexion et/ou les matrices distorsion mesurées expérimentalement le sont généralement entre des réseaux 2D de capteurs (par exemple un SLM et une caméra CCD). Les matrices mesurées ont donc une structure 4D. Afin de manipuler et représenter ces matrices, les réseaux 2D de capteurs sont concaténés suivant des vecteurs en entrée et en sortie, de telle sorte que les matrices de réflexion et/ou distorsion prennent finalement une forme bidimensionnelle plus aisée à manipuler et visualiser.

La FIG. 3B illustre à titre d'exemple la concaténation d'une matrice à partir de vecteurs 36 en entrée à $N \times N$ éléments (SLM) et de vecteurs 37 en sortie à $N \times N$ éléments (CCD) pour former une matrice 35 à $N^2 \times N^2$ éléments. Les $N^2$ éléments de chaque vecteur $r_{in}$ 36 en entrée sont agencés sur une colonne de la matrice 35 tandis que les $N^2$ éléments de chaque vecteur $r_{out}$ 37 en sortie sont agencés sur une ligne de la matrice 35.

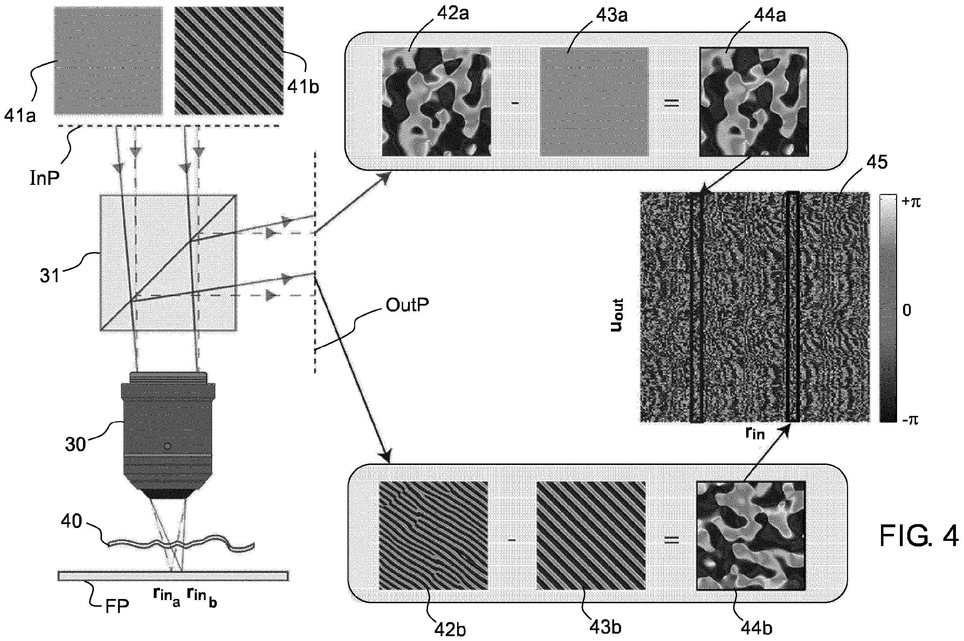

La FIG. 4 illustre par un schéma simplifié le concept de la matrice distorsion.

Un schéma simplifié d'un système de caractérisation d'un échantillon, similaire à celui de la FIG. 3A, est illustré sur la partie gauche de la FIG. 4. Dans cet exemple, une première onde lumineuse incidente, caractérisée dans la pupille d'entrée InP de l'objectif de microscope 30 par un premier mode transverse $41_a$, est appliquée par exemple au moyen d'un SLM (non représenté) de telle sorte à être focalisée dans le plan focal de l'objectif de microscope. Ce mode transverse est focalisé en un point de focalisation du plan focal FP, conjugué avec un point $\mathbf{r_{ina}}$ du plan source SP (non représenté). Une deuxième onde lumineuse incidente, caractérisée dans la pupille d'entrée InP de l'objectif de microscope 30 par un deuxième mode transverse $41_b$, est focalisée en un point de focalisation du plan focal FP, conjugué avec un point $\mathbf{r_{inb}}$ du plan source SP. Le champ électromagnétique réfléchi est mesuré dans l'espace de Fourier (dans cet exemple le plan pupille de sortie OutP) par une caméra CCD (non représentée), par exemple par des techniques d'interférométrie connues (non représentées). Les images $42_a$ et $42_b$ illustrent respectivement la phase du champ électromagnétique réfléchi pour les points d'entrée $\mathbf{r_{ina}}$ et $\mathbf{r_{inb}}$. Ces champs bidimensionnels sont repérés par le vecteur $\mathbf{u_{out}}$. Après concaténation, ils forment deux colonnes d'une matrice de réflexion $\mathbf{R_{ur}}$ (non représentée), déterminée entre le plan pupille de sortie OutP et le plan source SP. Chaque colonne de cette matrice $\mathbf{R_{ur}}$ correspond ainsi au champ électromagnétique réfléchi dans le plan pupille OutP (repéré par $\mathbf{u_{out}}$) pour une onde incidente focalisée en un point $\mathbf{r_{in}}$ du plan focal.

Le champ électromagnétique réfléchi présente une composante géométrique (onde plane), dont la projection sur la caméra CCD est illustrée respectivement par les images $43_a$ et $43_b$ pour les points de focalisation en entrée $\mathbf{r_{ina}}$ et $\mathbf{r_{inb}}$, et une composante distordue résultant par exemple de la traversée d'un aberrateur schématisé sur la FIG. 4 par la couche aberrante 40. Les images $44_a$ et $44_b$ illustrent la composante distordue du front d'onde pour chacun des champs électromagnétiques réfléchis $42_a$ et $42_b$. Après concaténation, ces composantes distordues du front d'onde $44_a$ et $44_b$ forment deux colonnes de la matrice distorsion $\mathbf{D_{ur}}$ (image 45 de la FIG. 4). Les colonnes de la matrice distorsion $\mathbf{D_{ur}}$ sont ainsi formées de la composante distordue des champs électromagnétiques réfléchis par différents points de focalisation $\mathbf{r_{in}}$ du champ de vision, mesurés dans le plan d'observation et repérés par le vecteur $\mathbf{u_{out}}$.

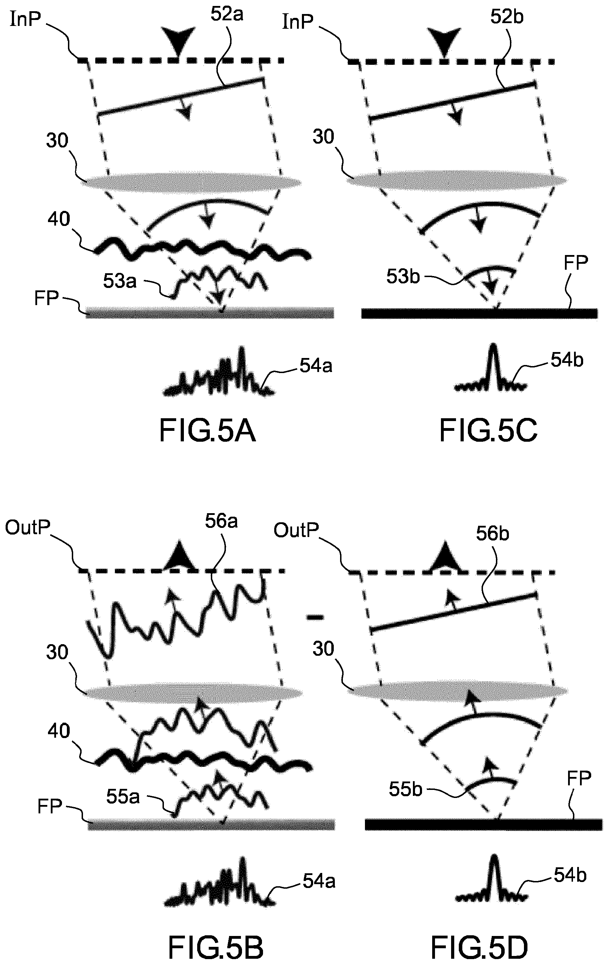

En pratique, pour isoler la composante distordue du front d'onde réfléchi, on retranche à la phase du champ électromagnétique réfléchi celui qui serait obtenu idéalement en l'absence d'aberrations, pour un milieu modèle, comme cela est illustré sur les FIGS. 5A - 5D.

Comme illustré sur la FIG. 5A, en présence d'un aberrateur 40, un front d'onde incident émis $52_a$ formé pour focaliser dans le plan focal FP de l'objectif de microscope 30 en un point de focalisation $\mathbf{r_{in}}$ est distordu par le film aberrateur (front d'onde $53_a$) et donne lieu à une tache focale aberrée $54_a$ dans le plan focal FP. Ce champ incident est réfléchi par le milieu (FIG. 5B). Le front d'onde réfléchi $55_a$ traverse une nouvelle fois le film aberrateur puis est mesuré dans le plan pupille OutP (front d'onde $56_a$), par exemple par des techniques interférométriques. Ce champ réfléchi, $R(\mathbf{u_{out}}, \mathbf{r_{in}})$, présente une composante géométrique liée à la diffraction et une composante distordue liée à l'aberrateur. Pour séparer ces deux composantes, on imagine la même expérience sans aberrateur, avec un milieu de référence et un miroir plan dans le plan focal (FIGS. 5C, 5D). Le même front d'onde incident $52_b$ est formé pour focaliser au point de focalisation $\mathbf{r_{in}}$ et donne lieu à une tache focale non aberrée $54_b$ dans le plan focal FP. Ce champ incident est réfléchi par le miroir dans le plan focal (FIG. 5D). Le front d'onde réfléchi $55_b$ est finalement déterminé dans le plan pupille OutP (front d'onde $56_b$). En soustrayant la phase de ce champ idéal à celle du champ mesuré expérimentalement, on extrait la composante distordue du champ, $D(\mathbf{u_{out}}, \mathbf{r_{in}})$, qui va former une colonne de la matrice $\mathbf{D_{ur}}$. En répétant cette opération pour chaque point du plan focal, on obtient la matrice distorsion $\mathbf{D_{ur}}$.

Dans le cas où le milieu modèle est homogène et un miroir parfait est placé dans le plan focal, le champ idéalement reçu $56_b$, que l'on note $G_0(\mathbf{u_{out}}, \mathbf{r_{in}})$, ne contient que la composante géométrique liée à la diffraction et n'est autre qu'une onde plane. $\mathbf{G_0}$ n'est autre que la matrice de propagation entre le plan source SP et le plan pupille OutP, avec :

$$G_0(\mathbf{u_{out}}, \mathbf{r_{in}}) = \frac{e^{j\varphi_0}}{j\lambda f} e^{-j\frac{2\pi}{\lambda f}\mathbf{u_{out}} \cdot \mathbf{r_{in}}} \qquad (1)$$

où $j$ est l'unité imaginaire, $\varphi_0$ est un terme de phase constant, $f$ est la distance focale de l'objectif de microscope et $\lambda$ la longueur d'onde du front d'onde incident. L'équation (1) traduit la relation de transformée de Fourier spatiale entre le champ issu du plan source SP (et de ses plans conjugués) et le plan pupille de sortie OutP.

Ainsi, la matrice distorsion $\mathbf{D}$ peut être construite dans le plan d'observation par le produit matriciel d'Hadamard (*i.e* le produit matriciel terme à terme) suivant :

$$\mathbf{D_{ur}} = \mathbf{R_{ur}} o \mathbf{G_0^*} \qquad (2)$$

où Gô est la matrice conjuguée en phase de $\mathbf{G_0}$ et o représente le produit matriciel terme à terme (produit matriciel d'Hadamard). Pour rappel, les éléments de la matrice $\mathbf{G}_0^*$ conjuguée en phase de la matrice $\mathbf{G}_0$ sont des nombres complexes présentant le même module que les coefficients de $\mathbf{G}_0$ mais un argument opposé.

Dans le cas d'un milieu modèle inhomogène, l'expression de $\mathbf{G}_0$ devient plus compliquée que celle donnée en équation (1). Par exemple, dans le cas d'un milieu multicouches d'indice optique variable, la matrice $\mathbf{G}_0$ pourra être calculée analytiquement par un produit matriciel entre les différentes matrices de transmission associées à la propagation de l'onde dans chacune des couches. Pour un milieu modèle plus compliqué, typiquement non invariant par translation (e.g interface courbe), la matrice $\mathbf{G}_0$ pourra être déterminée au moyen d'une simulation numérique ou d'un calcul semi-analytique.

La matrice distorsion peut également être étudiée dans le plan focal. Une matrice distorsion « plan focal » $\mathbf{D}_{rr}$ peut être obtenue à partir de la matrice distorsion exprimée dans le plan d'observation $\mathbf{D}_{ur}$ par le changement de base suivant :

$$\mathbf{D}_{rr} = \mathbf{G}_0^{\dagger}\,\mathbf{D}_{ur} \qquad (3)$$

soit en terme de coefficients matriciels

$$D(\mathbf{r}'_{out}, \mathbf{r}_{in}) = C \sum_{\mathbf{u}_{out}} D(\mathbf{u}_{out}, \mathbf{r}_{in}) \exp\left[j(2\pi/\lambda f)\,\mathbf{u}_{out}.\mathbf{r}'_{out}\right] = R(\mathbf{r}_{out} - \mathbf{r}_{in}, \mathbf{r}_{in}) \qquad (4)$$

où l'exposant † désigne l'opération matricielle de transposé conjugué et C est une constante. Les colonnes de $\mathbf{D}_{rr}$ correspondent au champ réfléchi dans le plan image recentré sur le point de focalisation $\mathbf{r}_{in}$. La matrice $\mathbf{D}_{rr}$ donne donc l'évolution de la fonction d'étalement en réflexion du système d'imagerie en chaque point du champ de vision, la fonction d'étalement étant la réponse impulsionnelle du système d'imagerie, c'est-à-dire la tache focale recentrée sur le point d'illumination. Comme cela sera décrit par la suite, cela permet de quantifier et caractériser les aberrations induites par l'échantillon en amont du plan focal.

Pour aller plus loin dans l'analyse de la matrice distorsion $\mathbf{D}_{ur}$, on peut avantageusement considérer d'une part le cas d'une réflexion par l'échantillon principalement spéculaire et d'autre part le cas d'une réflexion principalement diffuse. Ces deux régimes peuvent être discriminés par l'échelle de variation spatiale L caractéristique du potentiel de désordre associé au milieu hétérogène en fonction d'un paramètre $\delta_A$ qui représente la taille caractéristique de la tâche focale aberrée. Plus précisément, dans le cas d'un aberrateur pouvant être modélisé comme un écran de phase aléatoire et bidimensionnel, $\delta_A$ peut s'écrire :

$$\delta_A \sim \frac{\lambda z}{l_C} \qquad (5)$$

où $l_c$ est la longueur de cohérence de l'aberrateur et z est la distance entre la lame aberratrice et le plan focal PF.Si L > $\delta_A$, on peut faire l'approximation d'un régime de réflexion spéculaire (souvent le cas dans le régime des longueurs d'onde optique). Dans le cas inverse, l'échantillon induit une réflexion diffuse. En pratique, on peut se trouver dans des cas intermédiaires qui combinent réflexion diffuse et réflexion spéculaire. Dans le cas spéculaire, la matrice distorsion $\mathbf{D}_{ur}$ présente visuellement des corrélations entre ses colonnes. Comme cela sera décrit par la suite, ces corrélations correspondent à la répétition du même motif de distorsion pour les fronts d'onde issus du même domaine d'isoplanétisme. Pour un échantillon induisant une réflexion diffuse, par exemple de type speckle (répartition aléatoire de diffuseurs non résolus), on pourra étudier la matrice de corrélation normalisée de la matrice distorsion $\mathbf{D}_{ur}$ pour faire apparaître ces mêmes corrélations. Dans tous les cas, comme cela sera décrit plus en détails par la suite, la recherche des invariants de la matrice $\mathbf{D}_{ur}$, par exemple au moyen d'une décomposition en valeurs singulières (SVD), permet d'extraire la transmittance complexe de l'aberrateur pour chaque point du plan focal et ainsi corriger de manière optimale les aberrations dans chaque domaine d'isoplanétisme contenu dans le champ de vision.

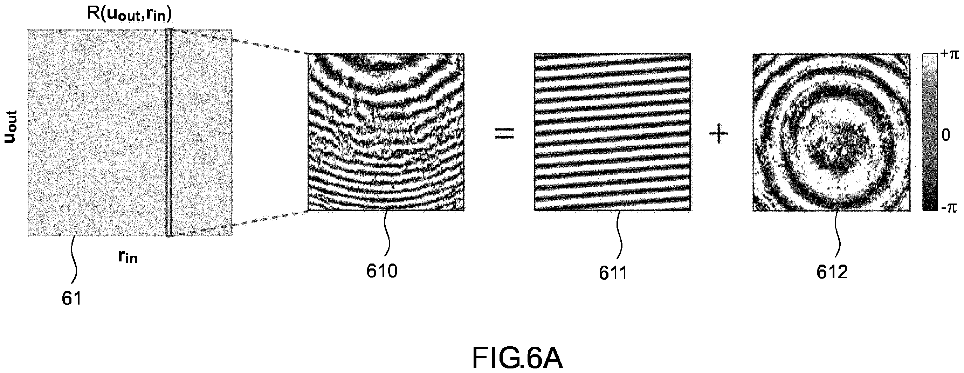

Les FIGS. 6A à 6C illustrent respectivement un exemple de matrice de réflexion, la matrice de réflexion plan focal correspondante et la matrice distorsion déterminées expérimentalement dans le cas d'un échantillon induisant une réflexion spéculaire (mire de résolution) et pour un défaut de mise au point de 10 $\mu$m. Le dispositif expérimental est celui décrit en FIG. 2. Le champ de vision de $250{\times}250$ $\mu$m$^2$ est balayé à l'aide de N=3136 illuminations focalisées (résolution spatiale de 4.5 $\mu$m).

La FIG. 6A illustre la phase de la matrice de réflexion $\mathbf{R}_{ur}$ (image 61) mesurée entre le plan focal à l'émission (SP) et le plan pupille à la réception (OutP). Chaque colonne de cette matrice contient le champ réfléchi dans le plan pupille pour une illumination en un point $\mathbf{r_{in}}$ donné. L'image 610 représente la phase de ce champ complexe correspondant à une colonne de $\mathbf{R_{ur}}$. La phase mesurée ici diffère grandement de la phase du champ attendue dans un cas idéal, $G_0(\mathbf{u_{out}}, \mathbf{r_{in}})$ (611). Pour isoler la distorsion du front d'onde liée aux aberrations, on peut retrancher la phase idéale attendue (611) à la phase mesurée expérimentalement (610). Le masque de phase ainsi obtenu (612) correspond à une colonne de la matrice distorsion $\mathbf{D_{ur}}$ (équation 2). Il cumule les aberrations subies par l'onde incidente et l'onde réfléchie à travers l'objectif de microscope. Il s'agit ici d'anneaux de Fresnel caractéristiques d'un défaut de mise au point.

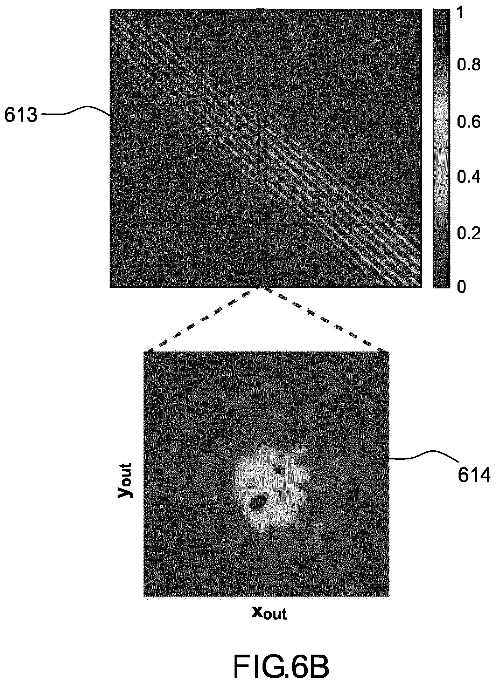

La matrice de réflexion plan focal $\mathbf{R_{rr}}$ est représentée (en module) sur la FIG. 6B (image 613). La matrice de réflexion plan focal est obtenue à partir de la matrice de réflexion $\mathbf{R_{ur}}$ mesurée entre le plan focal à l'émission (SP) et le plan pupille à la réception (OutP) par un simple changement de base. La tache focale (image 614) pour une focalisation de l'onde incidente au centre du champ de vision est obtenue à partir de la colonne centrale de la matrice de réflexion plan focal $\mathbf{R_{rr}}$. La dispersion de l'énergie en dehors de la diagonale de $\mathbf{R_{rr}}$ (image 613) et l'étalement de la tâche focale (image 614) au-delà d'un pixel (i.e. une cellule de résolution) illustrent et quantifient le niveau des aberrations présentes dans l'expérience décrite ici.

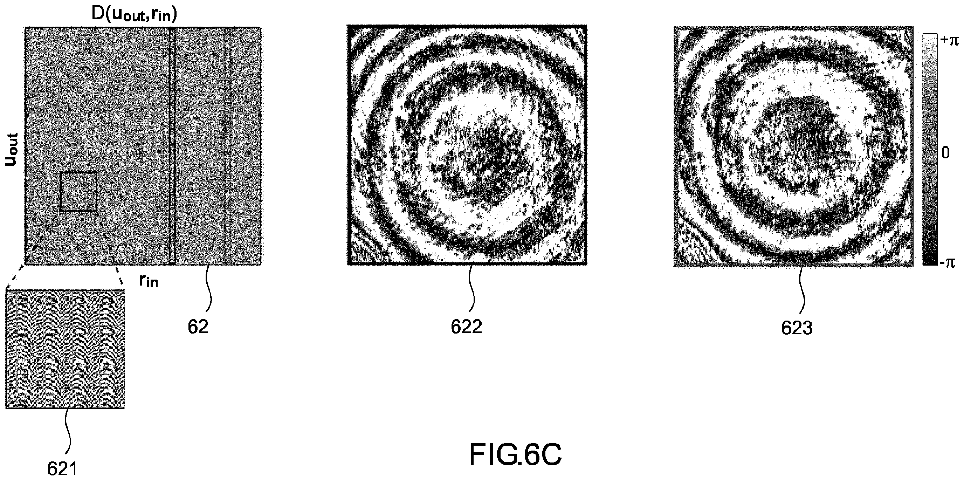

La phase de la matrice distorsion $\mathbf{D_{ur}}$ formée à partir de la matrice de réflexion $\mathbf{R_{ur}}$ est montrée sur la FIG. 6C (image 62). Elle présente une grande corrélation que ce soit suivant ses lignes ou ses colonnes, en témoigne le zoom sur quelques-uns de ses éléments, représenté sur l'image 621. La corrélation suivant les colonnes est liée au fait que la distorsion du front d'onde et la réflectivité de l'objet varient lentement en fonction du point de focalisation $\mathbf{r_{in}}$. Les images 622 et 623 représentent les distorsions de phase associées à deux colonnes distinctes de $\mathbf{D_{ur}}$ représentées sous une forme bidimensionnelle. La ressemblance entre ces deux images témoigne de l'invariance spatiale caractéristique d'un défaut de mise au point. Cela signifie que ces points du champ de vision sont associés à la même distorsion de front d'onde ; autrement dit, ils sont situés dans le même domaine d'isoplanétisme. Les corrélations entre les lignes de la matrice $\mathbf{D_{ur}}$ sont inhérentes au caractère déterministe de la loi d'aberration (anneaux de Fresnel) associée à un défaut de mise au point.

Toujours dans l'hypothèse d'un échantillon induisant une réflexion spéculaire, on décrit ci-dessous des exemples d'utilisation de la matrice distorsion pour déterminer une cartographie d'une ou plusieurs lois d'aberrations dans le plan d'observation, notamment pour établir une cartographie de la réflectivité de l'échantillon.

Pour cela, on recherche les invariants de la matrice distorsion, autrement dit les lois d'aberrations invariantes spatialement sur les domaines d'isoplanétisme du champ de vision. Différentes méthodes sont connues de l'homme du métier pour rechercher les invariants d'une telle matrice, comme par exemple la décomposition en valeurs singulières (ou « SVD » selon l'abréviation anglo-saxonne « Singular Value Décomposition ») ou l'analyse en composantes principales (« PCA » selon l'abréviation anglo-saxonne « Principal Component Analysis »).

La décomposition en valeurs singulières est un outil puissant pour extraire les corrélations entre les lignes ou les colonnes d'une matrice. Mathématiquement, la SVD de la matrice $\mathbf{D_{ur}}$, de taille $N^2 \times N^2$, s'écrit de la manière suivante :

$$\mathbf{D_{ur}} = \mathbf{U} \times \mathbf{\Sigma} \times \mathbf{V}^\dagger \qquad (6)$$

$\mathbf{U}$ et $\mathbf{V}$ sont des matrices unitaires de taille $N^2 \times N^2$ dont les colonnes $\mathbf{U_i}$ et $\mathbf{V_i}$ correspondent aux vecteurs propres en sortie et en entrée. L'exposant † désigne la matrice transposée conjuguée. Chaque vecteur propre en sortie $\mathbf{U_i}$ est défini dans le plan pupille repéré par le vecteur $\mathbf{u_{out}}$. Chaque vecteur propre en entrée $\mathbf{V_i}$ est donc défini dans le plan focal repéré par le vecteur r. $\Sigma$ est une matrice de taille $N^2 \times N^2$ dont seuls les éléments diagonaux sont non nuls:

$$\mathbf{\Sigma} = \mathbf{diag}(\sigma_1, \sigma_2, \cdots, \sigma_{N^2}) \qquad (7)$$

Les éléments diagonaux de la matrice $\Sigma$ sont les valeurs singulières $\sigma_i$, de la matrice $\mathbf{D_{ur}}$ qui sont réelles, positives et classées dans un ordre décroissant :

$$\sigma_1 > \sigma_2 > \cdots > \sigma_{N^2} \qquad (8)$$

Les coefficients $D(\mathbf{u_{out}}, \mathbf{r_{in}})$ de la matrice $\mathbf{D_{ur}}$ s'écrivent donc comme la somme suivante:

$$D(\mathbf{u_{out}}, \mathbf{r_{in}}) = \sum_{i=1}^{N^2} \sigma_i U_i(\mathbf{u_{out}}) V_i^*(\mathbf{r_{in}}) \qquad (9)$$

La SVD décompose principalement une matrice en deux sous-espaces : un sous-espace signal (une matrice caractérisée par d'importantes corrélations entre ses lignes et/ou ses colonnes) et un sous-espace bruit (une matrice aléatoire sans corrélation entre ses lignes et colonnes). Le sous-espace signal est associé aux valeurs singulières les plus grandes alors que le sous-espace bruit est associé aux valeurs singulières les plus faibles. D'une part, la SVD de **D** va donc permettre de filtrer le sous-espace bruit qui contient à la fois le bruit expérimental et la contribution incohérente du champ réfléchi induit par les évènements de diffusion multiple. D'autre part, chaque état singulier du sous-espace signal va permettre d'extraire suivant le vecteur propre en sortie $\mathbf{U_i}$ la distorsion subie par l'onde dans le plan pupille pour chaque zone de l'image qui, elle, sera repérée par le vecteur propre en entrée $\mathbf{V_i}$.

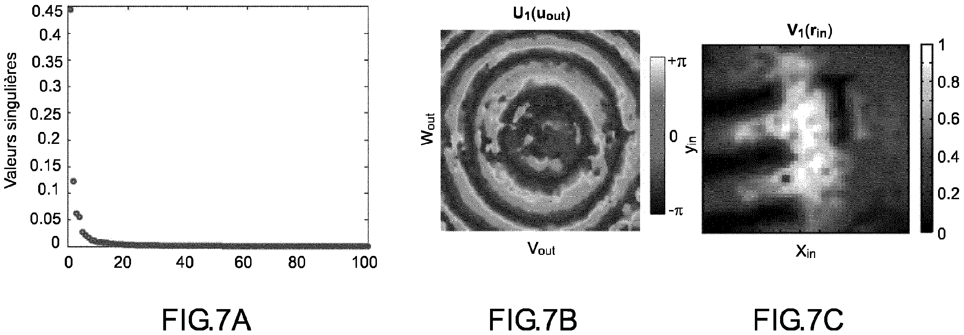

Les FIGS. 7A - 7C illustrent respectivement le spectre des valeurs singulières normalisées, la phase du premier vecteur propre en sortie $\mathbf{U_1}$ et le module du premier vecteur propre en entrée $\mathbf{V_1}$ dans l'hypothèse d'un défaut de mise au point, dans les conditions expérimentales décrites précédemment (FIGS. 6A -6C) et à partir de la matrice distorsion $\mathbf{D_{ur}}$ illustrée sur l'image 62 (FIG. 6C).

Comme illustré sur la FIG. 7A, la distribution des valeurs singulières normalisées est dominée par la première valeur singulière $\sigma_1$. Les vecteurs propres associés, $\mathbf{U_1}$ et $\mathbf{V_1}$, sont présentés sur les FIGS. 7B (phase de $\mathbf{U_1}$) et 7C (module de $\mathbf{V_1}$). Dans le cas d'un défaut de mise au point, les distorsions du front d'onde ne varient pas en fonction du point de focalisation dans le champ de vision. Autrement dit, le champ de vision ne contient qu'un seul domaine d'isoplanétisme. Dans le cas d'une réflexion spéculaire, on peut montrer que le vecteur propre en sortie $\mathbf{U_1}$ donne la distorsion induite par l'aberrateur cumulée sur l'aller et le retour :

$$U_1(\mathbf{u_{out}}) = A(\mathbf{u_{out}})A(\mathbf{u_{in}})\delta(\mathbf{u_{out}} + \mathbf{u_{in}}) \qquad (10)$$

avec $A(\mathbf{u_{out}})$ et $A(\mathbf{u_{in}})$ les distortions subies par le front d'onde à l'aller et au retour et projetées dans le plan pupille (repéré par le vecteur $\mathbf{u}$). La distribution de Dirac $\delta$ dans l'équation précédente traduit le fait, qu'en régime de réflexion spéculaire, une onde issue d'un point $\mathbf{u_{in}}$ dans le plan pupille en entrée donnera lieu à une onde réfléchie focalisée en $\mathbf{u_{out}} = \text{-}\mathbf{u_{in}}$ en sortie. Sur la FIG. 7B, la phase du premier vecteur propre en sortie $\mathbf{U_1}$ se présente bien sous la forme d'anneaux de Fresnel caractéristique d'une loi d'aberration associée à un défaut de mise au point. Par ailleurs, on peut montrer que le vecteur propre en entrée $\mathbf{V_1}$ donne quant à lui directement accès à la réflectivité $\rho$ de l'objet :

$$V_1(\mathbf{r_{in}}) = \rho(\mathbf{r_{in}}) \qquad (11)$$

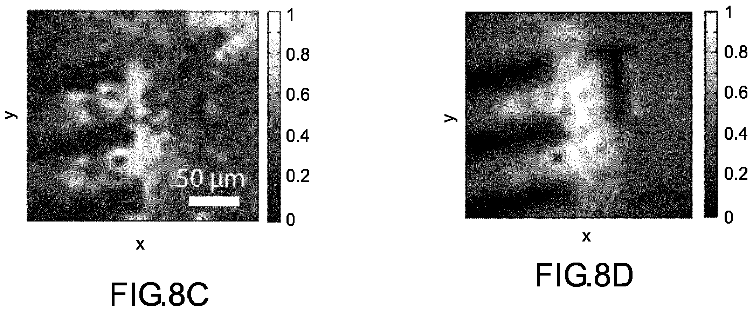

La FIG. 7C montre l'image de l'objet donnée par le vecteur propre en entrée $\mathbf{V_1}$. Cette image corrigée est à comparer avec l'image originale souffrant du défaut de mise au point montré sur la FIG. 8C.

La matrice de réflexion $\mathbf{R_{ur}}$ mesurée (61, FIG. 6A) peut être corrigée par conjugaison de phase de la distorsion du front d'onde extraite le long du vecteur propre en sortie $\mathbf{U_1}$. Physiquement, l'opération de conjugaison de phase consiste à réémettre un front d'onde modulé par une phase opposée à celle de la distorsion mesurée. Cette opération permet alors de compenser parfaitement les distorsions de phase cumulées par l'onde lors de son trajet à l'aller et au retour. Mathématiquement, l'opération de conjugaison de phase est réalisée ici en appliquant la correction suivante sur la matrice $\mathbf{R_{ur}}$ :

$$\mathbf{R'_{ur}} = \exp(-j \times \arg\{\mathbf{U_1}\})\mathrm{o}\mathbf{R_{ur}} \qquad (12)$$

Où $\arg\{\mathbf{U_1}\}$ désigne la phase de $\mathbf{U_1}$.

Une matrice corrigée $\mathbf{R'_{rr}}$ peut alors être déduite de $\mathbf{R'_{ur}}$ par changement de base en sortie du plan pupille (OutP) vers le plan image (ImP) . Une image confocale corrigée $I'$ peut être déduite de la diagonale ($\mathbf{r_{in}} = \mathbf{r_{out}}$) de la matrice $\mathbf{R'_{rr}}$ :

$$I'(\mathbf{r_{in}}) = R'(\mathbf{r_{in}}, \mathbf{r_{in}}) \qquad (13)$$

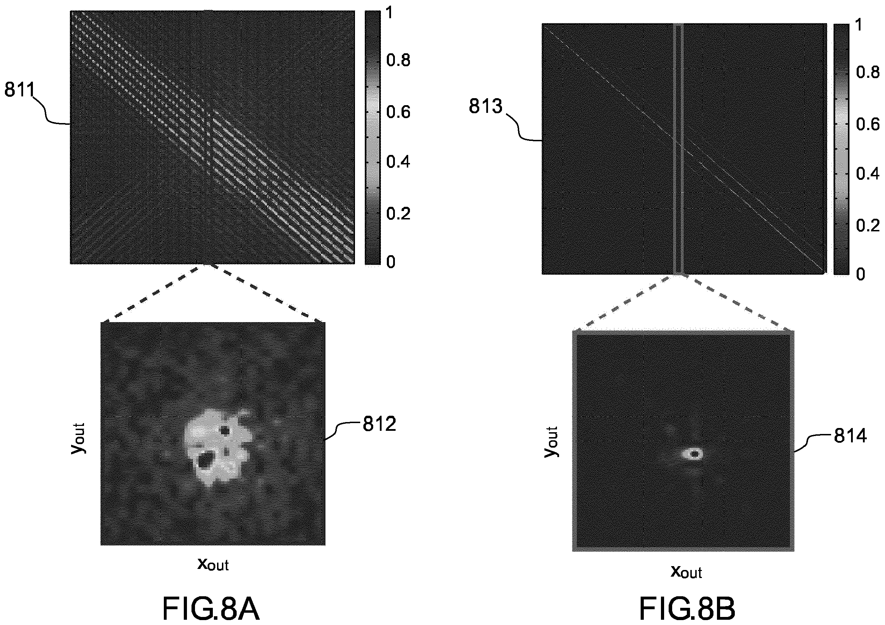

$I'(\mathbf{r_{in}})$ est alors un estimateur fidèle de la réflectivité $\rho(\mathbf{r_{in}})$ de l'échantillon. Les FIGS. 8A à 8D illustrent les effets de cette correction en comparant les matrices de réflexion respectivement avant et après correction ainsi que les images confocales obtenues dans chacun des cas. La FIG. 8A compare la matrice de réflexion plan focal $\mathbf{R_{rr}}$ avant correction (image 811) et la matrice de réflexion $\mathbf{R'_{rr}}$ (image 813) après application du vecteur $\exp(\text{-j}\arg\{\mathbf{U_1}\})$ depuis le plan pupille en sortie. La concentration de l'énergie autour de la diagonale de $\mathbf{R}'_{rr}$ comparé à $\mathbf{R}_{rr}$ montre l'effet de la correction des aberrations. La tache focale 812 déduite à partir d'une colonne de la matrice de réflexion $\mathbf{R}_{rr}$ (image 811) est comparée à la tache focale 814 (FIG. 8B) déduite à partir de la même colonne de la matrice de réflexion corrigée $\mathbf{R}'_{rr}$ (image 813). L'obtention d'une tache focale (image 814), dont la taille est seulement limitée par la diffraction, témoigne également de la qualité de la correction des aberrations. L'image confocale (FIG. 8D) déduite de la matrice corrigée $\mathbf{R}'_{rr}$ est comparée à l'image confocale de départ (image 8C) déduite de la matrice $\mathbf{R}_{rr}$. L'image obtenue (FIG. 8D) est de qualité équivalente à l'image fournie par le vecteur $\mathbf{V_1}$ (FIG. 7C). La FIG. 8 illustre ainsi le succès de l'approche pour imager un objet spéculaire en présence d'aberrations.

Dans l'exemple précédent, illustré au moyen des FIGS 6 à 8, on a vu un exemple de détermination expérimentale et d'analyse d'une matrice distorsion, comprenant notamment le calcul d'une loi d'aberration pour un défaut de mise au point ; le champ de vision ne contenait qu'un seul domaine d'isoplanétisme. On s'intéresse maintenant à un cas général pour lequel le champ de vision comprend plusieurs domaines d'isoplanétisme.

Les FIGS. 9A à 9D illustrent un exemple dans lequel l'aberrateur est cette fois ci formé par un film plastique. Comme illustré sur l'encart 90 de la FIG. 9A, un film aberrateur plastique 40 est positionné entre l'objectif de microscope 30 et le plan focal FP au niveau duquel est agencé l'échantillon (mire de résolution).

La surface rugueuse et irrégulière du film plastique entraîne de fortes distorsions des fronts d'onde incident et réfléchi. Une mesure de la matrice de réflexion est effectuée pour N = 441 illuminations incidentes permettant d'imager un champ de vision de $240 \times 240 \ \mu m^2$ avec un pas spatial $\delta r = 12 \ \mu m$.

L'effet de l'aberrateur est particulièrement visible sur la matrice de réflexion $\mathbf{R}_{rr}$ mesurée dans le plan focal (911, FIG. 9B). Alors que dans un cas idéal, cette matrice est quasiment diagonale, ici on observe un étalement important du champ réfléchi en dehors de cette diagonale. Dans ces conditions, la fonction d'étalement du système d'imagerie est fortement dégradée, en témoigne l'aspect aléatoire d'une tache focale caractéristique (FIG. 9B, 911) déduite la matrice $\mathbf{R}_{rr}$. L'image confocale (FIG. 9B, 913) déduite de cette matrice de réflexion présente également un aspect totalement aléatoire, sans relation avec la réflectivité de la mire de résolution.

La matrice distorsion déduite de $\mathbf{R}_{ur}$ (équation 2) est analysée sous la forme d'une SVD. Le spectre des valeurs singulières normalisées par $\sigma_1$ est présenté sur la FIG. 9C. Un continuum de valeurs singulières est obtenu, preuve qu'a priori le champ de vision contient plusieurs domaines d'isoplanétisme. Les trois premiers vecteurs propres dans les plans pupille et focal sont présentés sur les images 91 - 93 et 94 - 96, respectivement (FIG. 9C). Les vecteurs propres en sortie $\mathbf{U_i}$ montrent que les distorsions induites par le front d'onde sont complexes et associées à de hautes fréquences spatiales, contrairement au cas du défaut de mise au point [FIG. 7B]. Les vecteurs propres en entrée $\mathbf{V_i}$ décomposent l'objet dans le plan focal sur différentes aires d'isoplanétisme (images 94 - 96). Ils sont donc associés à des lois d'aberration $\mathbf{U_i}$ différentes dans le plan pupille [images 91 - 93]. La combinaison linéaire des modules des vecteurs propres $\mathbf{V_i}$ pondérés par les valeurs propres $\sigma_i^2$ associées donne finalement accès à une image du champ de vision corrigée des aberrations induites en amont

$$|\rho(\mathbf{r_{in}})|^2 = \sum_{i=1}^{Q} \sigma_i^2 |\mathbf{V_i}(\mathbf{r_{in}})|^2 \qquad (14)$$

où Q est le nombre de domaines d'isoplanétisme contenus dans le champ de vision. La combinaison des trois premiers vecteurs propres $\mathbf{V_i}$ donne une image très contrastée et bien résolue de la mire de résolution (image 99). La comparaison avec l'image confocale originale (image 97) est frappante et démontre le succès de l'approche. Les bienfaits d'une correction locale des aberrations (image 99) sont également mis en lumière par la comparaison avec l'image 98 qui serait obtenue par les techniques d'optique adaptative conventionnelle (état de l'art).

Après avoir traité le cas de la réflexion spéculaire qui est typiquement induite par un objet étendu, nous traitons maintenant le problème de la réflexion diffuse. La réflexion diffuse est typiquement induite par une répartition aléatoire de diffuseurs sous-résolus, situation que l'on rencontre notamment dans les tissus biologiques. Une approche itérative (post-processing) de la correction des aberrations, toujours basée sur la matrice distorsion, est donc adaptée.

L'étape #0 du processus est équivalente au cas spéculaire présenté ci-dessus. La matrice $\mathbf{R}_{ur}$ est corrigée en sortie par le conjugué de la phase du premier vecteur propre $\mathbf{U_1}$ de la matrice distorsion $\mathbf{D}_{ur}$ (équation 10). Notons la matrice corrigée résultante $\mathbf{R}_{ur}^{(1)}$. Cette étape initiale permet d'effectuer une correction globale des aberrations sur l'ensemble du champ de vision.

L'étape #1 consiste à recalculer une nouvelle matrice distorsion $\mathbf{D}_{ru}^{(1)}$ déduite de $\mathbf{R}_{ru}^{(1)}$ définie cette fois-ci entre le plan pupille en entrée et le plan focal en sortie. La nature aléatoire de l'objet rend maintenant plus judicieuse l'étude de la matrice de corrélation de $\mathbf{D}_{ru}^{(1)}$ dans le plan pupille, à savoir $\mathbf{B}^{(1)} = {}^t\mathbf{D}_{ru}^{(1)}\mathbf{D}_{ru}^{(1)*}$. Une décomposition en valeurs singulières de la phase de cette matrice $\mathbf{B}^{(1)}$, exp[$j$arg{$\mathbf{B}^{(1)}$}], donne un nouvel ensemble de vecteurs propres $\mathbf{U}_i^{(1)}$ associés à chaque aire d'isoplanétisme du champ de vision. La matrice de réflexion correspondante peut donc être corrigée cette fois-ci en entrée :

$$\mathbf{R}_{ru}^{(2)} = \mathbf{R}_{ru}^{(1)} \, o \, \exp\left(-j\arg\left\{\mathbf{U}_i^{(1)}\right\}\right) \qquad (15)$$

Les étapes suivantes consistent à reproduire le même processus en alternant correction des aberrations résiduelles en sortie (itérations paires) et entrée (itérations impaires). En revanche, à chaque étape, la correction s'effectue toujours avec le premier vecteur propre $\mathbf{U}_1^{(n)}$ de la phase de la matrice de corrélation, exp[$j$arg{$\mathbf{B}^{(n)}$}], de la matrice distorsion dans le plan pupille. Le choix de l'aire d'isoplanétisme est en effet réalisé à l'étape #1. Suivant que la correction soit en sortie ou en entrée, la matrice de corrélation dans le plan pupille $\mathbf{B}^{(n)}$ est donnée par : $\mathbf{B}^{(n)} = \mathbf{D}_{ur}^{(n)}\mathbf{D}_{ur}^{(n)\dagger}$ pour n pair (sortie) et $\mathbf{B}^{(n)} = {}^t\mathbf{D}_{ru}^{(1)}\mathbf{D}_{ru}^{(1)*}$ pour n impair (entrée). A chaque étape du processus, une image du champ de vision peut être déduite de la diagonale de la matrice de réflexion $\mathbf{R}_{rr}^{(n)}$ exprimée dans le plan focal. En pratique, quelques itérations suffisent à obtenir une correction optimale pour l'aire d'isoplanétisme sélectionnée. Une image de l'ensemble du champ de vision peut ensuite être obtenue en combinant les corrections déterminées pour chaque aire d'isoplanétisme.

La FIG.10 illustre les bienfaits de la méthode selon la présente description au moyen d'une simulation numérique mettant en jeu un objet dont la réflectivité est celle d'une mire de résolution en valeur absolue mais dont la phase est aléatoire ce qui induit un régime de réflexion diffuse. La matrice de réflexion est simulée pour un aberrateur engendrant un élargissement de l'ordre d'un facteur cinq de la tache focale et des domaines d'isoplanétisme couvrant un 1/10ème du champ de vision. La FIG. 10A montre l'image confocale initiale souffrant des aberrations. La FIG.10B montre l'image confocale de la matrice de réflexion $\mathbf{R}_{rr}^{(1)}$ suite à l'étape #0 qui permet une correction globale des aberrations à l'aide du vecteur $\mathbf{U}_1$. A l'étape suivante, les domaines d'isoplanétisme sont sélectionnés par le rang i du vecteur propre $\mathbf{U}_i^{(1)}$ de la matrice de corrélation normalisée, exp[$j$arg{$\mathbf{B}^{(1)}$}]. Les FIGS. 10C et 10D montrent les images confocales obtenues suite à l'itération des corrections des aberrations à partir des vecteurs $\mathbf{U}_1^{(1)}$ et $\mathbf{U}_2^{(1)}$. Comme attendu, ces images sont associées à des domaines d'isoplanétisme distincts du champ de vision et donnent une image fidèle de l'objet dans chacun de ces domaines.

La connaissance des lois d'aberrations en chaque point de l'échantillon peut non seulement être mise à profit pour l'imagerie mais également pour focaliser la lumière en n'importe quel point de l'échantillon. Par exemple, sur le dispositif expérimental de la FIG. 2, il peut s'agir d'appliquer au SLM une modulation de phase accumulant : (1) la loi de phase géométrique associée au milieu modèle pour focaliser sur le point visé ; (2) le conjugué de la loi d'aberration déterminée à partir de la matrice distorsion pour l'aire d'isoplanétisme contenant le point visé. En régime de réflexion spéculaire, la loi de correction d'aberrations appliquée correspondra à la phase du vecteur propre de sortie $\mathbf{U}_i$ de la matrice distorsion $\mathbf{D}_{ur}$ associée à l'aire d'isoplanétisme $\mathbf{V}_i$ contenant le point visé. Dans le cas diffus, il s'agira d'accumuler suivant un vecteur $\mathbf{W}$ l'ensemble des corrections d'aberrations obtenues en entrée de l'échantillon :

$$\mathbf{W} = \exp\left(-j\left[\arg\left\{\mathbf{U}_i^{(1)}\right\} + \sum_{n=1}\arg\left\{\mathbf{U}_1^{(2n+1)}\right\}\right]\right) \qquad (16)$$

Au-delà de la réflectivité du milieu ou de la connaissance des lois d'aberrations en chaque point d'un échantillon, la matrice distorsion permet de réaliser une tomographie 3D de l'indice optique de l'échantillon étudié. A partir de la matrice distorsion « plan focal » $\mathbf{D_{rr}}$, nous avons accès à la fonction d'étalement dans l'échantillon ainsi qu'aux aires d'isoplanétisme. Au lieu de corriger directement les images, l'idée est de faire évoluer le milieu de référence sur lequel est basé le calcul de la matrice distorsion à partir de la matrice de réflexion. Cela amène à une approche itérative de la matrice distorsion dans laquelle on fait évoluer le milieu de référence vers un modèle plus complexe (e.g. milieu multi-couches) de telle sorte à réduire l'étendue spatiale de la fonction d'étalement et à augmenter la taille des aires d'isoplanétisme. En allant de plus en plus profond dans l'échantillon, on peut reconstruire progressivement une carte tridimensionnelle de l'indice de réfraction, tout en obtenant une image de la réflectivité du milieu d'autant plus fidèle que le milieu de référence sera proche de la réalité.

La matrice distorsion « plan focal » $\mathbf{D_{rr}}$ donne accès à la fonction d'étalement du système d'imagerie en n'importe quel point du champ de vision. Ceci étant, même après correction des aberrations, un fond incohérent résiduel demeure sur chaque colonne de la matrice $\mathbf{D_{rr}}$. Ce fond incohérent est induit par les évènements de diffusion multiple se produisant en amont du plan focal. Un taux de diffusion multiple $\gamma(\mathbf{r_{in}})$ peut donc être mesuré localement à partir du rapport entre le niveau du fond incohérent ($|\mathbf{r_{out}} - \mathbf{r_{in}}| \gg \delta$) et le niveau de signal sur la colonne centrale de $\mathbf{D_{rr}}$ ($\mathbf{r_{out}} = \mathbf{r_{in}}$) :

$$\gamma(\mathbf{r_{in}}) = \frac{\langle |D(\mathbf{r_{out}} \neq \mathbf{r_{in}}, \mathbf{r_{in}})|^2 \rangle}{|D(\mathbf{r_{out}} = \mathbf{r_{in}}, \mathbf{r_{in}})|^2} \qquad (17)$$

Où le symbole (...) désigne une moyenne le long de chaque colonne de $\mathbf{D_{rr}}$ en dehors des éléments centraux ($|\mathbf{r_{out}} - \mathbf{r_{in}}| \gg \delta$). Par ailleurs en se plaçant à des temps supérieurs au temps balistique, par exemple en contrôlant le bras de référence dans l'interféromètre de la FIG.2, la fonction d'étalement peut également nous permettre de suivre la croissance du halo diffusif au sein du milieu et en tirer une mesure locale des paramètres de transport de l'onde multiplement diffusée (coefficient de diffusion ou libre parcours moyen de transport). L'étude du halo diffusif aux temps courts donne accès à une résolution spatiale bien plus fine que celle obtenue par l'état de l'art en tomographie optique diffuse [A. Badon et al., Optica 3, 1160-1166, 2016],

Selon un ou plusieurs exemples de réalisation, le procédé de caractérisation comprend également l'identification et/ou la suppression de la composante spéculaire du champ réfléchi et/ou des réflexions multiples induites entre les différentes interfaces du milieu hétérogène. En effet, un réflecteur n'est jamais parfaitement spéculaire et sa composante diffuse ne sera alors pas corrigée de manière optimale par l'itération des équations (12) et (15). Par ailleurs, un réflecteur spéculaire peut induire des réflexions multiples entre ses interfaces susceptibles de brouiller l'image. Il est donc nécessaire de pouvoir séparer les composantes spéculaire et diffuse du champ réfléchi par le milieu. A cette fin, la matrice distorsion peut être projetée dans la base définie par le plan de correction des aberrations à la fois en entrée et en sortie. Une matrice distorsion « plan de Fourier » $\mathbf{D_{uu}}$ peut être obtenue à partir de la matrice distorsion originale $\mathbf{D_{ur}}$ par le changement de base suivant :

$$\mathbf{D_{uu}} = \mathbf{D_{ur}} \; {}^t\mathbf{G_0} \qquad (18)$$

L'équation précédente se réécrit donc en terme de coefficients matriciels de la manière suivante:

$$D(\mathbf{u_{out}}, \mathbf{u'_{in}}) = C \sum_{\mathbf{r_{in}}} D(\mathbf{u_{out}}, \mathbf{r_{in}}) \exp\left[-j\frac{2\pi}{\lambda f} \mathbf{u'_{in}} \cdot \mathbf{r_{in}}\right] = R(\mathbf{u_{out}}, \mathbf{u_{in}} + \mathbf{u_{out}}) \; (19)$$

Les composantes spéculaires et multiplement réfléchies apparaissent pour des couples précis, $\mathbf{u_{in}}$ et $\mathbf{u_{out}}$, tel que

$$\mathbf{u_{in}} + \mathbf{u_{out}} = \mathbf{u} \qquad (20)$$

où $\mathbf{u}/\lambda f$ est la fréquence spatiale de l'objet spéculaire. $\mathbf{u}$ est par exemple nul si le réflecteur spéculaire est disposé perpendiculairement à l'axe optique. Les composantes spéculaires et multiplement réfléchies peuvent donc être aisément filtrées et seule la composante diffuse (speckle) du champ réfléchi pourra être conservée pour déterminer de manière précise les aberrations induites et les corriger. Cette discrimination de la composante diffuse permet ensuite d'accéder directement aux lois d'aberration à appliquer itérativement en entrée et sortie pour corriger la matrice de réflexion et obtenir une image optimale du milieu (itération des corrections en sortie et entrée suivant les équations (12) et (15)), ce qui est n'est pas possible si la composante spéculaire prédomine [une seule correction appliquée en sortie suivant l'équation (12)]. En outre, le filtrage de la matrice distorsion dans le plan de Fourier permet d'éliminer les réflexions multiples qui polluent par exemple les images à proximité des interfaces (échos multiples entre interfaces du milieu).

Comme expliqué précédemment, un montage expérimental tel que décrit dans l'article de A. Badon *et al.* cité dans la partie « état de l'art » de la présente demande, peut être utilisé pour déterminer une matrice de réflexion du champ de vision dans une base définie entre un plan conjugué dudit plan focal et un plan d'observation, par exemple un plan conjugué avec un plan pupille de l'objectif de microscope. Chaque colonne de la matrice de réflexion correspond alors au terme d'interférence croisé mesuré dans le plan d'observation entre l'onde réfléchie par l'échantillon et une onde de référence pour une onde incidente focalisée en un point donné du plan focal. La matrice distorsion peut alors être calculée à partir de la matrice de réflexion ainsi déterminée et d'une matrice de réflexion de référence, comme décrit précédemment.

Bien entendu, d'autres montages connus de l'état de l'art peuvent être utilisés pour la mesure de la matrice de réflexion. Par exemple, dans l'article de Kang et al, ("Imaging deep within a scattering medium using collective accumulation of single-scattered waves" Nat. Photonics 9, 253-258 (2015)), un montage optique permet la mesure de la matrice de réflexion dans le plan pupille à la fois en entrée et sortie. Il est possible de construire une matrice distorsion à partir d'une telle matrice de réflexion, en appliquant un changement de base en entrée afin de se projeter dans un plan conjugué avec le plan focal.

Les demandeurs ont également montré que l'on pouvait mettre en oeuvre des montages expérimentaux permettant une mesure directe d'une première matrice distorsion sans passer par la détermination préalable d'une matrice de réflexion.

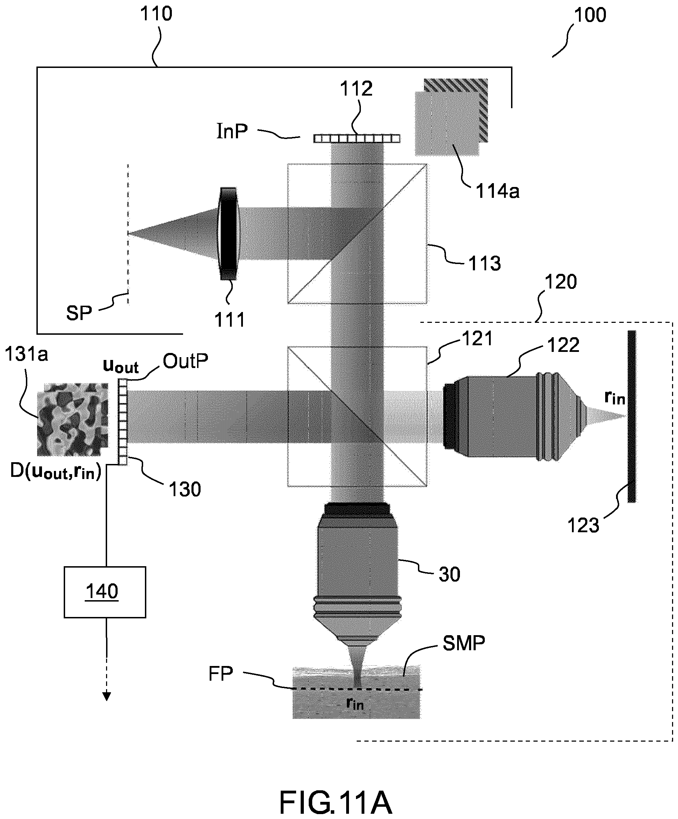

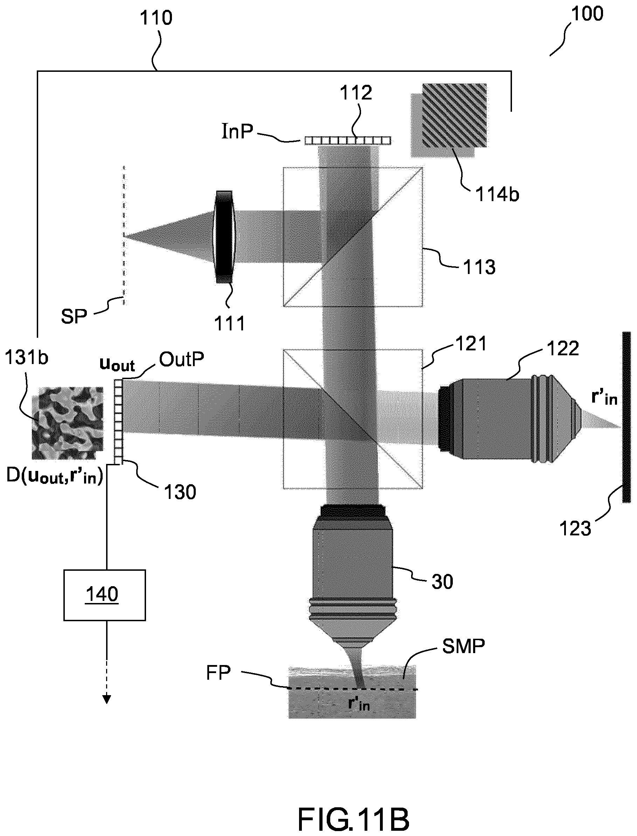

Des exemples de montages sont présentés au moyen des FIGS. 11 à 13.

Les FIGS. 11A et 11B présentent ainsi un premier exemple de réalisation d'un système de caractérisation optique non invasive d'un milieu hétérogène, permettant une détermination expérimentale d'une matrice distorsion. Dans cet exemple, la source de lumière est spatialement cohérente et la matrice distorsion est mesurée dans une base définie entre un plan source conjugué avec le plan focal et un plan d'observation conjugué avec un plan de la pupille de sortie OutP de l'objectif de microscope. Bien entendu, on pourrait choisir un autre plan d'observation, comme expliqué précédemment.

Plus précisément, le système 100 représenté de façon schématique sur les FIGS 11A et 11B comprend l'objectif de microscope 30 qui définit le plan focal FP dans lequel est destiné à être positionné l'échantillon SMP formé du milieu hétérogène.

Le système 100 comprend un dispositif d'émission lumineuse 110 configuré pour l'émission d'une série d'ondes lumineuses incidentes destinées à l'illumination à travers l'objectif de microscope 30 d'un champ de vision donné de l'échantillon. Plus précisément dans cet exemple, le dispositif d'émission lumineuse 110 comprend une source de lumière spatialement cohérente (non représentée), par exemple positionnée dans un plan focal objet ou plan source SP d'une lentille 111 afin d'éclairer un modulateur spatial de lumière (SLM) 112 au moyen d'un séparateur de faisceau 113. Le SLM agit comme un réseau de diffraction dynamique et forme un ensemble d'ondes planes destinées à être focalisées en autant de points de focalisation $r_{in}$ du plan focal de l'objectif de microscope 30. Ainsi, les FIGS 11A et 11B illustrent respectivement la formation par le SLM 112 de deux ondes planes dont la phase est représentée respectivement par les images $114_a$, $114_b$ et qui sont destinées à être focalisées en deux points de focalisation $r_{in,a}$ et $r_{in,b}$ du plan focal FP de l'objectif de microscope. La source de lumière spatialement cohérente est avantageusement une source de lumière large bande spectrale, par exemple une diode super-luminescente ou un laser femto-seconde.

Le système 100 comprend en outre un dispositif interférométrique 120, dans cet exemple un interféromètre de Linnik, un détecteur d'acquisition bidimensionnel 130, par exemple une caméra CCD ou CMOS, et une unité de calcul 140 recevant notamment les signaux optoélectroniques issus du détecteur 130.

L'interféromètre de Linnik 120 comprend un élément séparateur de faisceau 121 permettant de former un bras objet et un bras de référence. Sur le bras objet se trouve l'objectif de microscope 30 au foyer duquel est agencé l'échantillon SMP. Sur le bras de référence se trouve un deuxième objectif de microscope 122, qui peut être identique à l'objectif de microscope 30, et un miroir de référence 123 agencé dans un plan focal du deuxième objectif de microscope 122. L'interféromètre de Linnik 120 est couplé au dispositif d'émission lumineuse 110 afin de balayer une onde incidente focalisée dans le plan focal des objectifs de microscope 30 et 122. L'interférence entre les faisceaux issus des bras objet et de référence est enregistré (interférogramme) pour chaque point de focalisation dans le plan pupille des objectifs de microscope à l'aide du détecteur d'acquisition bidimensionnel 130.

Pour chaque point de focalisation $r_{in}$, plusieurs interférogrammes sont enregistrés pour différentes positions du miroir de référence. Par interférométrie à décalage de phase [A. Dubois et al., « High resolution full field optical cohrence tomography with a Linnik microscope, Appl. Opt. 41, 805 (2002).], l'unité de calcul 140 reconstruit le terme d'interférence croisé entre le champ électromagnétique complexe réfléchi par l'échantillon SMP (respectivement 131a, 131b sur les FIGS 11A, 11B) et une onde de référence; il correspond à une colonne de la matrice distorsion $D_{ur} = [D(u_{out}, r_{in})]$. En effet, en mesurant les interférences entre le champ issu du bras objet, $E_r(u_{out}, r_{in}, t)$, et le champ issu du bras de référence, $E_r(u_{out}, r_{in}, t)$, dans le plan pupille plutôt que dans un plan image conjugué au plan focal, les déposants ont montré qu'il était possible de déterminer directement la matrice distorsion $D_{ur}$ :

$$D(\mathbf{u_{out}}, \mathbf{r_{in}}) = \int dt \; E_r(\mathbf{u_{out}}, \mathbf{r_{in}}, t) \times E_0^*(\mathbf{u_{out}}, \mathbf{r_{in}}, t + \tau) \qquad\qquad (21)$$

S'il n'y a rien entre l'objectif de microscope et le miroir, le milieu de référence est de l'air. Si on introduit du gel entre l'objectif de microscope et le miroir, le milieu de référence sera un milieu homogène d'indice optique proche des tissus biologiques.

L'unité de calcul 140 est par ailleurs configurée notamment pour déterminer à partir de ladite matrice distorsion ainsi obtenue, au moins une cartographie d'un paramètre physique du milieu hétérogène formant l'échantillon, comme cela a été décrit en détails dans les exemples précédents. L'unité de calcul 140 peut être reliée à une unité de contrôle (non représentée) pour le contrôle notamment du SLM, etc. L'unité de calcul et l'unité de contrôle peuvent être intégrées dans un même dispositif (ordinateur).

Le système de caractérisation optique tel qu'illustré sur les FIGS 11A et 11B présente l'avantage de permettre une détermination expérimentale de la matrice distorsion sans détermination préalable d'une matrice réflexion, ce qui permet de gagner en temps de calcul, puisque le produit d'Hadamard sur la matrice de réflexion est réalisée physiquement et non numériquement. On gagne également en précision car on n'arrive pas numériquement au même degré de précision que ce qui est obtenu par interférométrie.

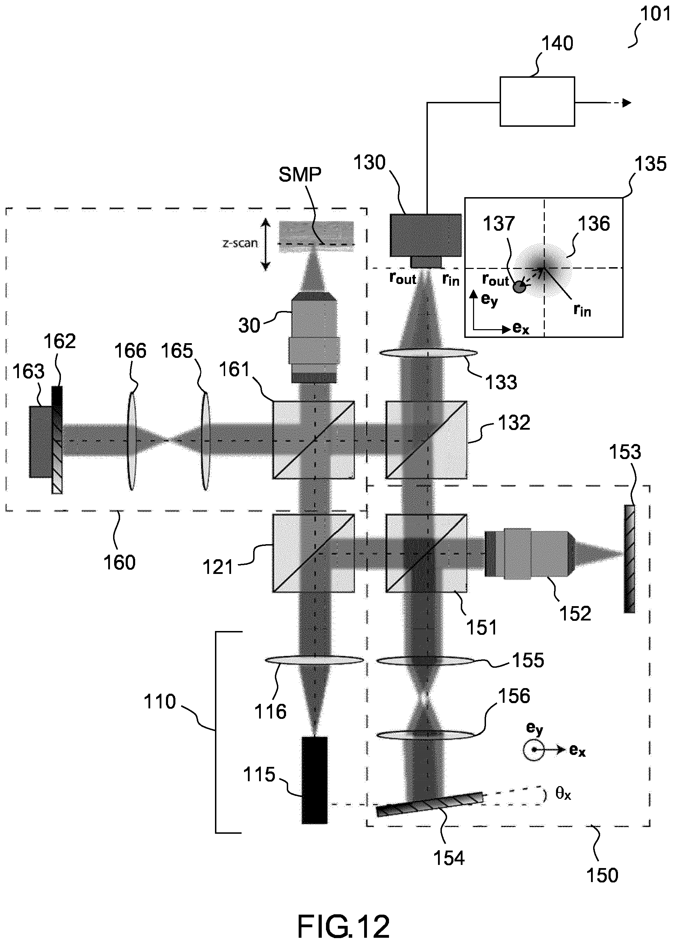

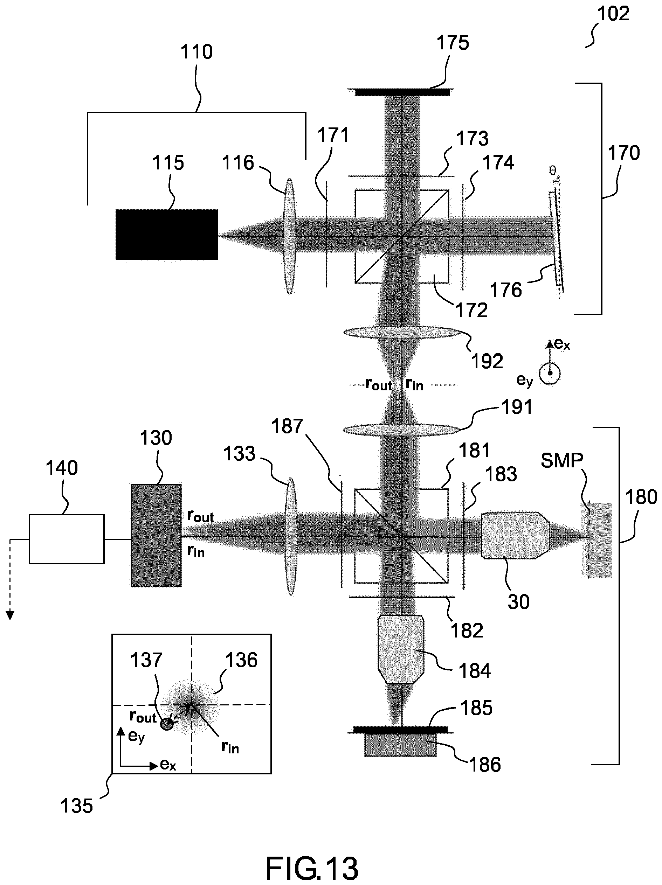

Les FIGS 12 et 13 présentent deux autres exemples de systèmes de caractérisation optique d'un milieu hétérogène, permettant également la détermination d'une matrice de distorsion directement (sans détermination préalable d'une matrice réflexion) et qui permettent en outre de s'affranchir du balayage du plan focal, nécessaire dans la mise en oeuvre du système illustré sur les FIGS 11A, 11B.

Les systèmes décrits sur les FIGS 12 et 13 utilisent un éclairage incohérent spatialement (par exemple une diode électroluminescente, lampe halogène, etc.) et sont dérivés de l'OCT plein champ, tel que décrit par exemple dans [A. Dubois et al., « High resolution full field optical cohrence tomography with a Linnik microscope, Appl. Opt. 41, 805 (2002).].

Pour rappel, l'OCT plein champ tel que décrit par exemple dans la référence ci-dessus mentionnée est basé sur l'utilisation d'un dispositif expérimental comprenant par exemple un interféromètre de Michelson avec des objectifs de microscope placés dans ses deux bras (configuration dite de Linnik). Le dispositif d'illumination de l'interféromètre utilise une lampe halogène à filament de tungstène ou une diode électroluminescente (LED). Grâce au spectre très large de ce type d'illumination, des interférences se produisent à condition que la différence de marche dans l'interféromètre soit très proche de zéro. La longueur du bras de référence de l'interféromètre détermine, au niveau de l'échantillon à imager, une tranche d'épaisseur fixée par la largeur du spectre de la source lumineuse (typiquement $1\mu m$). Seule la lumière réfléchie par les structures de l'échantillon situées dans cette tranche crée des interférences. Ces structures peuvent être imagées si l'on parvient à extraire l'amplitude du signal d'interférence. Pour cela, on combine plusieurs images interférométriques, acquises au moyen d'un détecteur matriciel CCD ou CMOS, et déphasées entre elles grâce à l'oscillation du miroir de référence. On obtient ainsi une image du volume de cohérence en temps réel (cadence de quelques centaines de Hertz), c'est-à-dire l'image d'une fine tranche orientée transversalement. La résolution transverse des images OCT plein champ est similaire à celle des images fournies par un microscope, soit environ $1\mu m$. La résolution axiale est quant à elle bien meilleure qu'en microscopie classique car elle est fixée par la largeur du spectre de la source lumineuse et non pas par la profondeur de champ de l'objectif de microscope. L'un des avantages de l'OCT plein champ est de pouvoir accéder à une image d'une tranche du milieu en une mesure sans avoir à scanner le champ de vision comme cela est le cas en microscopie confocale par exemple. En OCT plein champ, chaque pixel de la caméra est conjugué avec un point du plan focal du bras de référence et un point du plan focal du bras objet. Il mesure donc la fonction de cohérence mutuelle entre ces deux points. Puisque chaque plan focal est illuminé par un champ incohérent à la fois spatialement et temporellement, cette fonction de cohérence mutuelle donne accès à la réponse impulsionnelle (ou fonction de Green) entre ces points conjugués. Chaque pixel de l'image OCT plein champ correspond donc à la réponse impulsionnelle qui serait mesurée entre une source et un détecteur ponctuels placés à une position r identique dans les plans source et image. Si l'on revient au formalisme matriciel adopté dans la présente demande, un dispositif de type OCT plein champ permet ainsi une acquisition simultanée de tous les éléments diagonaux, $R(\mathbf{r_{in}},\mathbf{r_{in}})$, de la matrice de réflexion $\mathbf{R_{rr}}$ associée à l'échantillon.

Selon un exemple de réalisation de la présente description, pour accéder à l'ensemble de la matrice de réflexion, les réponses impulsionnelles sont mesurées entre des points d'illumination $\mathbf{r_{in}}$ et de détection $\mathbf{r_{out}}$ distincts. Pour cela, les champs issus des bras objet et référence de l'interféromètre sont translatés l'un par rapport à l'autre.

C'est ce qui est mis en oeuvre dans les systèmes originaux 101 et 102 présentés sur les FIGS 12 et 13.

Le système 101 illustré de façon schématique sur la FIG. 12 comprend un dispositif d'illumination 110 adapté pour l'émission d'une série d'ondes lumineuses incidentes destinées à l'illumination à travers l'objectif de microscope 30 d'un champ de vision donné de l'échantillon. Dans cet exemple cependant, le dispositif d'illumination 110 comprend, comme en OCT plein champ, une source lumineuse 115 spatialement incohérente, par exemple une lampe halogène à filament de tungstène ou une diode électroluminescente, agencé dans cet exemple au foyer d'une lentille 116 pour former les ondes lumineuses incidentes. En pratique, une illumination homogène est mise en place, par exemple au moyen d'un système d'illumination de Köhler.

Le système 101 comprend comme en OCT plein champ un interféromètre à faible cohérence avec un élément séparateur de faisceaux 121 permettant de séparer l'onde incidente issue du dispositif d'illumination vers un bras référence 150 et un bras objet 160.

Dans le bras de référence 150, l'onde incidente est tout d'abord envoyée par un séparateur de faisceaux 151 vers un miroir 153 placé dans le plan focal d'un deuxième objectif de microscope 152. L'objectif de microscope 152 peut être similaire à l'objectif de microscope 30. L'onde réfléchie par le miroir 153 est ensuite redirigée à l'aide de l'élément séparateur de faisceaux 151 vers un miroir 154 conjugué avec un plan pupille de l'objectif de microscope 152 au moyen d'un afocal 155, 156. Le miroir 154 constitue un élément inventif principal du dispositif car son inclinaison va permettre de décaler spatialement le faisceau de référence sur la caméra.

Le bras objet du dispositif est symétrique du bras de référence afin d'obtenir des différences de marche identiques. L'onde incidente est envoyée par un élément séparateur de faisceaux 161 vers l'échantillon SMP. L'échantillon SMP et le miroir 153 sont dans des plans conjugués optiquement. L'onde réfléchie est ensuite redirigée par le séparateur de faisceaux 161 vers un miroir 162 conjugué avec le plan pupille de l'objectif de microscope 30 grâce à l'afocal 165, 166 et conjugué avec le miroir 154 du bras de référence. Contrairement au miroir 154 qui peut être incliné, ce dernier est maintenu perpendiculaire à l'axe optique.

Ainsi, en sortie des bras de référence 150 et objet 160, les ondes réfléchies respectivement par le miroir de référence et l'échantillon sont décalées spatialement, dans un plan conjugué avec le plan focal. Les ondes réfléchies ainsi formées sont recombinées grâce à un séparateur de faisceaux 132. Une lentille 133 permet de les faire interférer sur une caméra CCD ou CMOS 130 placée dans le plan focal image de l'échantillon. Un élément piézo-électrique (PZT) 163 placé sur le miroir 162 permet d'extraire le terme d'interférence croisé par acquisition d'interférogrammes pour plusieurs valeurs de la phase, par exemple 3 valeurs de phase ou davantage, comme décrit dans la référence ci-dessus mentionnée pour l'OCT plein champ.

Comme montré sur la FIG. 12, l'inclinaison du miroir 154 fait que les faisceaux réfléchis issus des bras de référence et objet sont décalés spatialement l'un par rapport à l'autre dans un plan conjugué avec le plan focal. Contrairement à l'OCT plein champ, on peut ainsi mesurer la réponse impulsionnelle entre des points $\mathbf{r_{in}}$ et $\mathbf{r_{out}}$ distincts. Leur position relative $\mathbf{r'_{out}}$ est déterminée par l'inclinaison du miroir,

$$\mathbf{r'_{out}} = \mathbf{r_{out}} - \mathbf{r_{in}} = G \tan \theta_x \, \mathbf{e_x} + G \tan \theta_y \, \mathbf{e_y} \qquad (22)$$

où $\theta x$ et $\theta y$ sont les angle d'inclinaison du miroir par rapport aux axes portés par les vecteurs unitaires $\mathbf{e_x}$ et $\mathbf{e_y}$. $G = f/f$ est le grossissement du système avec f la focale de la lentille 133 placée devant la caméra.

Les déposants ont ainsi montré que pour chaque angle d'inclinaison $(\theta_x, \theta_y)$, on enregistre une sous-diagonale d'une matrice correspondant aux coefficients $R(\mathbf{r_{out}} - \mathbf{r_{in}}, \mathbf{r_{in}})$ pour une position relative $\mathbf{r'_{out}}$ (équation 22) entre le faisceau référence et le faisceau objet. Cette mesure revient donc à mesurer directement la matrice distorsion dans le plan focal puisque $D(\mathbf{r'_{out}}, \mathbf{r_{in}}) = R(\mathbf{r_{out}} - \mathbf{r_{in}}, \mathbf{r_{in}})$ (équation 4).

Chaque colonne de la matrice $\mathbf{D_{rr}}$ dans le plan focal correspond à la tâche focale $R(\mathbf{r_{out}} - \mathbf{r_{in}}, \mathbf{r_{in}})$ centrée sur le point d'illumination $\mathbf{r_{in}}$, i.e la fonction d'étalement du dispositif d'imagerie au point $\mathbf{r_{in}}$. Le dispositif présenté sur la FIG. 12 permet donc une mesure directe de la matrice distorsion dans l'espace réel. Comme précédemment, le milieu de référence est de l'air sauf si on introduit dans le bras de référence un gel ou un autre matériau qui présente un indice optique proche des milieux biologiques.

Une simple transformée de Fourier de la matrice $\mathbf{D_{rr}}$ permet ensuite de passer dans le plan pupille en sortie et d'obtenir la matrice $\mathbf{D_{\theta r}}$ pour déterminer les domaines d'isoplanétisme du champ de vision et les lois d'aberration associées, comme expliqué précédemment. Le fait d'acquérir directement la matrice $\mathbf{D_{rr}}$ présente un grand avantage par rapport à une mesure cohérente de la matrice de réflexion $\mathbf{R_{rr}}$. Le nombre de points de mesure nécessaires pour acquérir $\mathbf{D_{rr}}$ est en effet de l'ordre du nombre de cellules de résolution contenues dans la tâche focale aberrée : $N_A = (\delta_A/\delta)^2$. Il est indépendant de la taille du champ de vision. Au contraire, l'approche cohérente nécessite un nombre $N = (FOV/\delta)^2$ d'illuminations focalisées. Pour des niveaux d'aberration typiques dans les milieux biologiques, l'acquisition de $N_A \sim 10$ images suffit pour accéder à l'ensemble de la matrice distorsion à l'aide du montage incohérent de la FIG. 12. Au contraire, pour un champ de vision typique de $\sim 1 \text{ mm}^2$, il faudrait balayer un champ de vision contenant $N = 10^6$ pixels avec un montage cohérent comme ceux présentés dans l'article de A. Badon *et al.* et celui de Kang *et al.*.

Un autre exemple de système de caractérisation optique d'un milieu hétérogène selon la présente description est représenté de façon schématique sur la FIG. 13. Le système 102 présenté sur la FIG. 13 est plus compact et plus efficace en termes de rapport signal à bruit que le système présenté sur la FIG. 12.

Le système 102 comprend, comme dans l'exemple de la FIG. 12, un dispositif d'illumination 110 comprenant une source lumineuse 115 spatialement incohérente agencé au foyer d'une lentille 116 et adapté pour l'émission d'une série d'ondes lumineuses incidentes destinées à l'illumination à travers l'objectif de microscope 30 d'un champ de vision donné de l'échantillon SMP. Le système 102 comprend également un dispositif d'acquisition bidimensionnel 130, agencé au foyer d'une lentille 133 et une unité de calcul 140 recevant notamment les signaux optoélectroniques issus du détecteur 130.

Dans cet exemple cependant, le système 102 comprend deux interféromètres placés en série. Le premier interféromètre, référence 170, est par exemple un interféromètre de Michelson en configuration coin d'air permettant de générer à sa sortie deux faisceaux d'illumination inclinés l'un par rapport à l'autre et de polarisations orthogonales. Le deuxième interféromètre, référence 180, est par exemple un interféromètre de Linnik avec un séparateur de faisceaux polarisé 181 ainsi que des lames quart d'onde 182, 183 sur chacun des bras. Un système afocal 191, 192 permet de conjuguer les plans des miroirs 175 et 176 du premier interféromètre 170 avec les plans pupilles des objectifs de microscope 30 et 184 du second interféromètre 180.

Nous décrivons maintenant en détail le fonctionnement de ce système. Le champ incident, spatialement et temporellement incohérent, est tout d'abord polarisé rectilignement à 45 deg des directions parallèle (e∥) et normale (e⊥) par rapport au plan du dispositif, au moyen d'un polariseur 171. Les composantes de cette onde polarisée suivant les directions e∥ et e⊥ sont respectivement transmises et réfléchies par un séparateur de faisceaux polarisés 172. Chaque bras de l'interféromètre 170 contient une lame quart d'onde (173, 174) et un miroir (175, 176). Sur l'un des bras, le miroir (176) est incliné par rapport à l'axe optique. A leur retour, les deux ondes issues de chaque bras sortent de l'interféromètre sous forme de deux faisceaux inclinés polarisés orthogonalement. Ces deux faisceaux sont toutefois cohérents entre eux puisqu'issus de la même onde incidente.

Dans le deuxième interféromètre, les deux faisceaux sont à nouveau séparés par le séparateur de faisceaux polarisés 181. Le faisceau polarisé suivant e∥ est transmis dans le bras de référence. Le faisceau polarisé suivant e⊥ est réfléchi dans le bras objet. La présence de lames quarts d'ondes 182, 183 sur chacun des deux bras permet de transmettre les deux faisceaux de manière optimale une fois ces derniers réfléchis par l'échantillon dans le bras objet et le miroir sur le bras de référence. Ces deux faisceaux sont recombinés en sortie de l'interféromètre à l'aide d'un analyseur 187 polarisé à 45deg par rapport à e∥ et e⊥. Ils peuvent ainsi interférer dans le plan focal de la lentille 133. Une caméra CCD ou CMOS enregistre la figure d'interférence correspondante. Comme précédemment, une méthode de décalage de phase, réalisée à l'aide d'un élément piézo-électrique 186 accolé au miroir 182 sur le bras de référence de l'interféromètre 180, permet d'extraire le terme interférentiel de l'image enregistrée par la caméra. Comme montré sur la FIG. 13, l'inclinaison du miroir 175 fait que les faisceaux référence et objet sont décalés l'un par rapport à l'autre sur la caméra. Comme pour le montage précédent, on mesure ainsi la réponse impulsionnelle entre des points $r_{in}$ et $r_{out}$ distincts. Leur position relative $r'_{out}$ est déterminée par l'inclinaison du miroir suivant l'équation 22.

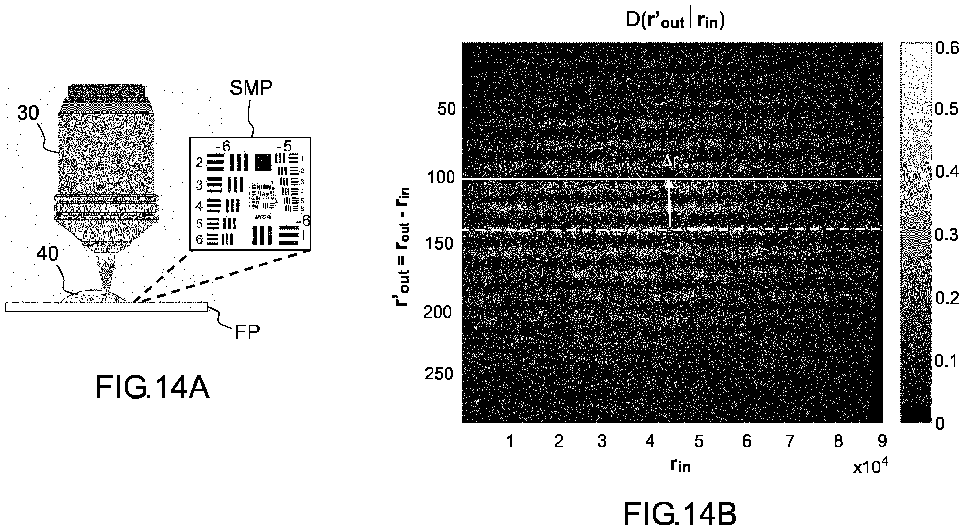

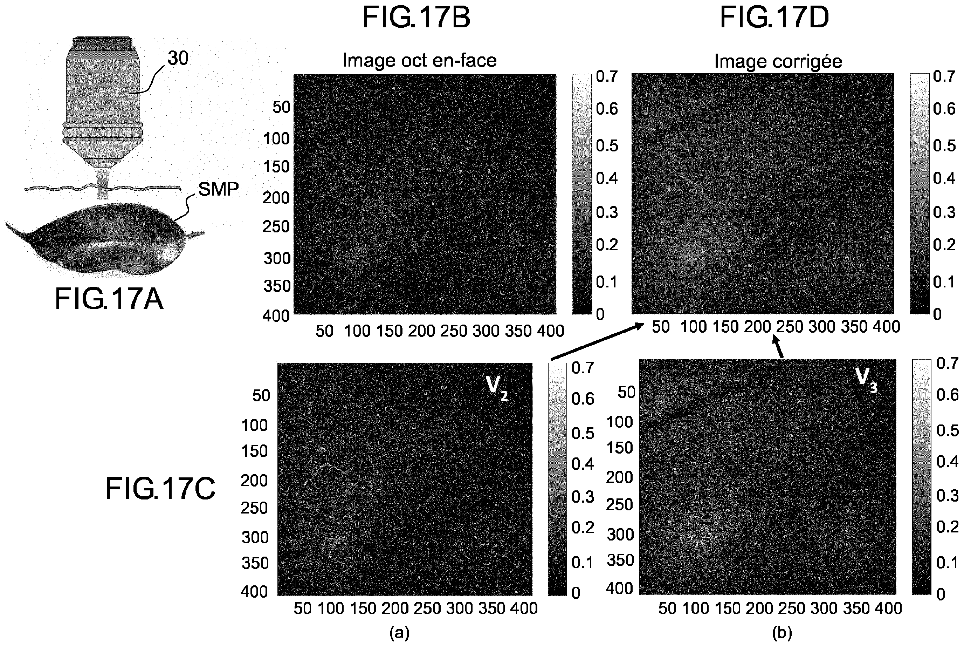

Les FIGS 14 à 16 montrent des premiers résultats expérimentaux obtenus avec un système de caractérisation tel que décrit sur la FIG. 12 et la FIG. 17 montre des résultats expérimentaux obtenus avec un système de caractérisation tel que décrit sur la FIG. 13.

Les FIGS 14 à 16 illustrent les résultats obtenus pour une mire (échantillon SMP) observée à travers une cornée de singe anormale 40 (FIG. 14A). La mire est positionnée dans le plan focal FP de l'objectif de microscope 30 (FIG. 12). Le dispositif expérimental est celui décrit en FIG. 12. L'échantillon est imagé au moyen d'une diode électroluminescente (850 nm, 480 mW) à travers un objectif de microscope 4× sur un champ de vision de $1.5 \times 1.5$ mm$^2$ avec une résolution spatiale de 5 μm (300 × 300 pixels). La matrice distorsion $\mathbf{D_{rr}}$ est obtenue expérimentalement en mesurant la fonction d'étalement pour chaque point $r_{in}$ du champ de vision sur une aire de 17×17 pixels, i.e 289 acquisitions au lieu des 90000 qu'il aurait fallu avec le montage cohérent de la FIG. 2.

La FIG. 14B illustre la matrice distorsion $\mathbf{D_{rr}}$ mesurée au moyen du montage de la FIG. 12, selon le procédé décrit ci-dessus.

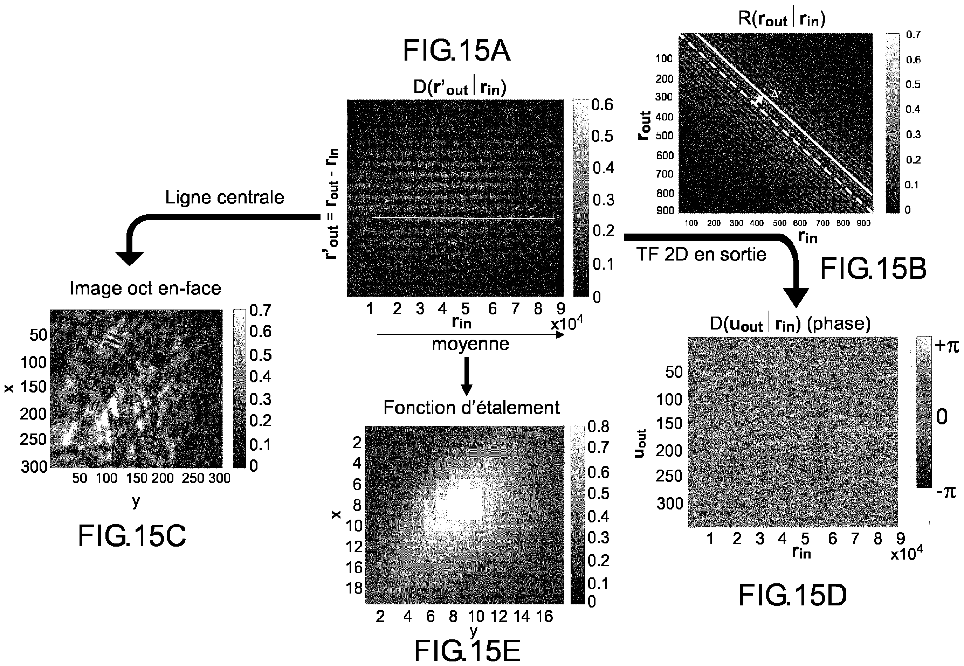

A partir de la matrice distorsion $\mathbf{D_{rr}}$ également représentée sur la FIG. 15A, on peut déterminer la matrice réflexion plan focal $\mathbf{R_{rr}}$ en réarrangeant les données comme indiqué par l'équation (4). Une image OCT en face peut être déduite d'une ligne centrale de la matrice $\mathbf{D_{rr}}$ tandis que la fonction d'étalement en chaque point $r_{in}$ du champ de vision correspond à chaque colonne de $\mathbf{D_{rr}}$. La FIG. 15E représente le module de cette fonction d'étalement moyennée sur tout le champ de vision. Une transformée de Fourier spatiale à deux dimensions en sortie de $\mathbf{D_{rr}}$ donne accès à la matrice distorsion $\mathbf{D_{ur}}$ (FIG. 15D) à partir de laquelle on pourra déterminer comme décrit précédemment les lois d'aberrations.

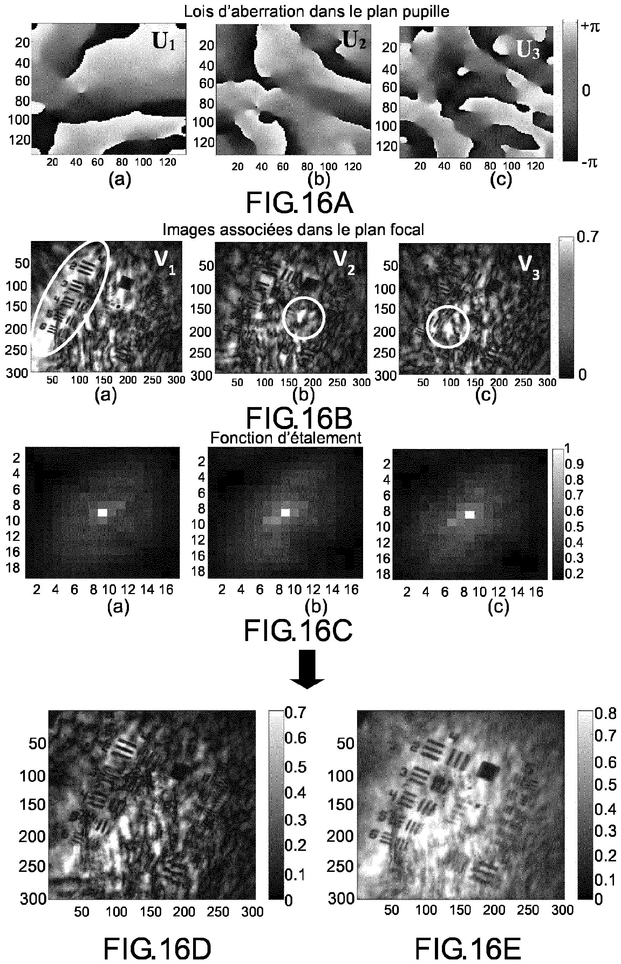

La FIG. 16A illustre les lois d'aberration mesurée dans le plan pupille (trois premiers vecteurs propres en sortie $\mathbf{U_1}$, $\mathbf{U_2}$, $\mathbf{U_3}$ montrés respectivement sur les images (a), (b), (c)). Les images associées dans le plan focal, vecteurs propres en entrée $\mathbf{V_1}$, $\mathbf{V_2}$, $\mathbf{V_3}$ sont montrées respectivement sur les images (a), (b), (c) de la FIG. 16B. Les fonctions d'étalement déduites des matrices corrigées $\mathbf{R'_{rr}}$ et $\mathbf{D'_{rr}}$ moyennées sur chaque domaine d'isoplanétisme sont illustrées sur les images (a), (b), (c) de la FIG. 16C. L'image OCT (FIG. 16D) correspondant à la ligne centrale de $D_{rr}$ est comparée avec l'image corrigée par combinaison linéaire des 10 premiers vecteurs propres (image 16E).

Ce premier exemple montre comment les dispositifs expérimentaux des FIGS. 12 ou 13 permettent une mesure directe de la matrice $D_{rr}$ sur des champs de vision millimétriques à une résolution micrométrique. Il montre également comment corriger simultanément des aberrations d'ordre élevé et donnant lieu à de multiples aires d'isoplanétisme dans le champ de vision.

Les FIGS. 17A - 17D illustrent l'application de la méthode selon la présente description à un deuxième exemple, à savoir l'imagerie en profondeur d'un milieu biologique, toujours en utilisant un montage expérimental du type de la FIG. 13. Contrairement au premier cas qui correspondait à un régime spéculaire, on se trouve ici dans un régime intermédiaire entre régimes spéculaire et diffus.

L'échantillon biologique imagé est ici une feuille d'arbre. Le champ de vision est de $2 \times 2$ mm$^2$ ($400 \times 400$ pixels) et le plan focal est situé à 70 $\mu$m de profondeur par rapport à la surface de la feuille (FIG. 17A).

La FIG. 17B montre l'image OCT « en face » issue de la ligne centrale de la matrice $D_{rr}$ mesurée. Cette image souffre d'un mauvais contraste lié à la rupture d'indice optique entre l'air et la feuille à sa surface ainsi qu'aux aberrations induites par la feuille elle-même. Ainsi certaines veines de la feuille sont difficilement visibles. L'analyse de la matrice distorsion donne accès à un ensemble de vecteurs propres $V_i$ dont deux exemples, $V_2$ et $V_3$, sont présentés respectivement sur les images (a) et (b) de la FIG. 17C. Ces deux images montrent que les deux vecteurs propres sont associés à des zones différentes de l'image. $V_2$ donne une image contrastée des veines les plus réfléchissantes alors que $V_3$ donne une image plus nette du speckle dans le fond de l'image. La FIG. 17D est l'image corrigée obtenue par combinaison linéaire des quinze premiers vecteurs propres $V_i$ de la matrice distorsion. La correction matricielle des aberrations donne une image nette et beaucoup plus contrastée de la section de la feuille, en témoigne la comparaison avec l'image OCT initiale montrée sur la FIG. 17B.

Comme dans l'exemple précédent, cet exemple montre la faisabilité de la méthode selon la présente description, au moyen d'un montage qui permet, d'une part, l'acquisition de matrice de distorsion et de réflexion de grande dimension et, d'autre part, la correction d'aberrations d'ordre élevé sur des champs de vision millimétriques à une résolution micrométrique.

Bien que décrite à travers un certain nombre d'exemples de réalisation détaillés, les procédés et systèmes de caractérisation optique non invasive comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Procédé de caractérisation optique non invasive d'un milieu hétérogène, le procédé comprenant :

    - une étape d'illumination au moyen d'une série d'ondes lumineuses incidentes d'un champ de vision donné dudit milieu hétérogène, positionné dans un plan focal d'un objectif de microscope; le procédé étant **caractérisé en ce qu'**il comprend :
    - une étape de détermination d'une première matrice distorsion ($D_{ur}$, $D_{rr}$) dans une base d'observation définie entre un plan conjugué dudit plan focal et un plan d'observation, ladite première matrice distorsion correspondant, dans une base de correction définie entre un plan conjugué dudit plan focal et un plan de correction des aberrations, au produit matriciel terme à terme d'une première matrice de réflexion ($R_{ur}$) dudit champ de vision déterminée dans ladite base de correction, avec la matrice conjuguée en phase d'une matrice de réflexion de référence, définie pour un milieu modèle, dans ladite base de correction;
    - une étape de détermination à partir de ladite première matrice distorsion, d'au moins une cartographie d'un paramètre physique dudit milieu hétérogène.

2. Procédé selon la revendication 1, dans lequel la détermination de ladite première matrice distorsion ($D_{ur}$, $D_{rr}$) comprend :

    - une étape de détermination expérimentale de ladite première matrice de réflexion ($R_{ur}$, $R_{rr}$) dans ladite base d'observation;
    - la construction de ladite première matrice distorsion à partir de ladite première matrice de réflexion et de ladite matrice de réflexion de référence définie dans la même base.

3. Procédé selon la revendication 2, dans lequel ladite base d'observation est la base de correction, et ladite première matrice distorsion est construite par le produit matriciel terme à terme de ladite première matrice de réflexion ($R_{ur}$) dudit champ de vision déterminée dans la base de correction avec la matrice conjuguée en phase de la matrice de réflexion de référence définie dans la même base.

4. Procédé selon la revendication 2, dans lequel ladite base d'observation est une base « plan focal » définie entre deux plans conjugués du plan focal, et ladite première matrice distorsion est construite par la corrélation spatiale entre chaque ligne et/ou colonne de la matrice de réflexion "plan focal" ($R_{rr}$) définie dans ladite base « plan focal » et la même ligne et/ou colonne de la matrice de réflexion de référence définie dans la même base.

5. Procédé selon la revendication 1, dans lequel :

- ladite étape d'illumination comprend l'illumination d'un bras objet et d'un bras de référence d'un interféromètre au moyen d'ondes lumineuses identiques, cohérentes spatialement, le bras objet comprenant l'objectif de microscope (30) dans le plan focal duquel se trouve ledit milieu hétérogène et le bras de référence comprenant un miroir de référence (123) ;
- ladite première matrice distorsion ($D_{ur}$) est déterminée dans ladite base de correction et la détermination de la première matrice distorsion comprend les étapes suivantes :

  o Pour chaque onde lumineuse incidente en un point ($r_{in}$) du plan focal, l'acquisition dans ledit plan de correction d'un interférogramme résultant de l'interférence entre le champ électromagnétique réfléchi par ledit point et le champ électromagnétique réfléchi par le miroir de référence ;
  o La construction de ladite première matrice distorsion, chaque colonne de la première matrice distorsion correspondant, pour une onde lumineuse incidente focalisée en un point ($r_{in}$) du plan focal, au champ électromagnétique associé au terme d'interférence croisé dudit interférogramme.

6. Procédé selon la revendication 1, dans lequel :

- ladite étape d'illumination comprend l'illumination d'un bras objet et d'un bras de référence d'un premier interféromètre au moyen d'ondes lumineuses incohérentes spatialement, le bras objet comprenant l'objectif de microscope (30) dans le plan focal duquel se trouve ledit milieu hétérogène et le bras de référence comprenant un miroir de référence (153, 185), les ondes réfléchies par le milieu hétérogène et le miroir de référence en sortie du premier interféromètre présentant un décalage spatial dans un plan conjugué avec le plan focal, le décalage étant variable;
- ladite première matrice distorsion ($D_{rr}$) est déterminée dans une base « plan focal » définie entre deux plans conjugués du plan focal et la détermination de ladite première matrice distorsion comprend les étapes suivantes :

  o Pour chaque décalage spatial ($r_{out}$-$r_{in}$), l'acquisition dans un plan conjugué du plan focal d'un interférogramme résultant de l'interférence entre lesdites ondes réfléchies par le milieu hétérogène et le miroir de référence et décalées spatialement ;
  o la construction de ladite première matrice distorsion, chaque ligne de la première matrice distorsion correspondant, pour une valeur de décalage spatial, au champ électromagnétique associé au terme d'interférence croisé dudit interférogramme.

7. Procédé selon l'une quelconque des revendications précédentes, dans lequel la détermination d'au moins une cartographie d'un paramètre physique dudit milieu hétérogène comprend :

- la détermination des invariants dans ledit plan focal de ladite première matrice distorsion, afin d'identifier au moins un premier domaine d'isoplanétisme dans ledit plan focal ;
- la détermination pour chaque premier domaine d'isoplanétisme identifié, d'une cartographie d'au moins une première loi d'aberration dans ledit plan de correction.

8. Procédé selon la revendication 7, dans lequel la détermination des invariants dans ledit plan focal de ladite première matrice distorsion comprend une décomposition en valeurs singulières d'au moins l'une des matrices du groupe de matrices comprenant : ladite première matrice distorsion, ladite première matrice distorsion normalisée, une matrice de corrélation normalisée de ladite première matrice distorsion.

9. Procédé selon l'une quelconque des revendications 7 à 8, comprenant en outre la détermination dans ladite base d'observation d'une matrice de réflexion dudit champ de vision corrigée par la ou lesdites première(s) loi(s) d'aberration.

10. Procédé selon la revendication 9, comprenant en outre :

- la détermination d'une deuxième matrice distorsion correspondant, dans ladite base de correction, au produit matriciel terme à terme de ladite matrice de réflexion corrigée déterminée dans ladite base de correction, avec la matrice conjuguée en phase de ladite matrice de réflexion de référence.

11. Procédé selon la revendication 10, comprenant en outre :

- la détermination des invariants dans ledit plan focal de ladite deuxième matrice distorsion, afin d'identifier au moins un deuxième domaine d'isoplanétisme dans ledit plan focal ;
- la détermination pour chaque deuxième domaine d'isoplanétisme identifié, d'une cartographie d'une deuxième loi d'aberration dans ledit plan de correction.

12. Procédé selon l'une quelconque des revendications précédentes, dans lequel la détermination d'au moins une cartographie d'un paramètre physique dudit milieu hétérogène comprend la détermination pour au moins un premier domaine d'isoplanétisme identifié, d'une première fonction d'étalement (PSF) dans ledit plan focal.

13. Système de caractérisation optique non invasive d'un milieu hétérogène comprenant :

- un premier objectif de microscope (30) définissant un plan focal dans lequel est destiné à être positionné ledit milieu hétérogène ;
- un dispositif d'émission lumineuse (110) pour l'émission d'une série d'ondes lumineuses incidentes, destinées à l'illumination à travers ledit objectif de microscope d'un champ de vision donné dudit milieu hétérogène ;
- un détecteur d'acquisition bidimensionnel (130) agencé dans un plan d'observation;
- un premier interféromètre couplé au dispositif d'émission lumineuse et au détecteur d'acquisition bidimensionnel, comprenant un bras objet avec ledit objectif de microscope (30) et un bras de référence comprenant un miroir de référence au foyer d'un deuxième objectif de microscope (123, 152, 184), ledit premier interféromètre étant configuré pour former au niveau dudit plan d'observation des interférences entre des ondes réfléchies par le milieu hétérogène et ledit miroir de référence,
- une unité de calcul (140), couplée au détecteur d'acquisition bidimensionnel, le système étant **caractérisé en ce que** l'unité de calcul est configurée pour :

    o déterminer, à partir des interférogrammes résultant desdites interférences, une première matrice distorsion ($D_{ur}$, $D_{rr}$) dans une base d'observation définie entre un plan conjugué dudit plan focal et ledit plan d'observation, ladite première matrice distorsion correspondant, dans une base de correction définie entre un plan conjugué dudit plan focal et un plan de correction des aberrations, au produit matriciel terme à terme d'une première matrice de réflexion ($R_{ur}$) dudit champ de vision déterminée dans ladite base de correction, avec la matrice conjuguée en phase d'une matrice de réflexion de référence, définie pour un milieu modèle, dans ladite base de correction;
    o déterminer à partir de ladite première matrice distorsion, au moins une cartographie d'un paramètre physique dudit milieu hétérogène.

14. Système de caractérisation optique non invasive d'un milieu hétérogène selon la revendication 13, dans lequel :

- ledit dispositif d'émission lumineuse (110) est configuré pour l'illumination dudit bras objet et dudit bras de référence au moyen d'ondes lumineuses identiques, cohérentes spatialement;
- la plan d'observation est un plan de correction des aberrations et le dispositif d'acquisition bidimensionnel est configuré pour l'acquisition, dans ledit plan de correction, et pour chaque onde lumineuse incidente en un point ($r_{in}$) du plan focal, d'un interférogramme résultant de l'interférence entre le champ électromagnétique réfléchi par ledit point et le champ électromagnétique réfléchi par le miroir de référence ;
- l'unité de calcul est configurée pour la construction de ladite première matrice distorsion, chaque colonne de la première matrice distorsion correspondant, pour une onde lumineuse incidente focalisée en un point ($r_{in}$) du plan focal, au champ électromagnétique associé au terme d'interférence croisé dudit interférogramme.

15. Système de caractérisation optique non invasive d'un milieu hétérogène selon la revendication 13, dans lequel :

- ledit dispositif d'émission lumineuse (110) est configuré pour l'illumination de l'ensemble du champ de vision sur lesdits bras objet et de référence au moyen d'ondes lumineuses incohérentes spatialement;
- le premier interféromètre est configuré pour former, en sortie dudit premier interféromètre, des ondes réfléchies par ledit milieu hétérogène et ledit miroir de référence, cohérentes entre elles, et présentant un décalage spatial dans un plan conjugué avec le plan focal, le décalage étant variable;
- le plan d'observation est un plan conjugué avec le plan focal et le dispositif d'acquisition bidimensionnel est configuré pour l'acquisition, dans ledit plan d'observation, et pour chaque décalage spatial, d'un interférogramme résultant de l'interférence entre lesdites ondes réfléchies par le milieu hétérogène et le miroir de référence et décalées spatialement ;
- l'unité de calcul est configurée pour la construction de ladite première matrice distorsion, chaque ligne de la première matrice distorsion correspondant, pour une valeur de décalage spatial, au champ électromagnétique associé au terme d'interférence croisé dudit interférogramme.

16. Système de caractérisation optique non invasive d'un milieu hétérogène selon la revendication 15, dans lequel :

- Le premier interféromètre comprend un premier séparateur de faisceau (121) configuré pour former lesdits bras objet (160) et de référence (150);
- le bras de référence (150) comprend un deuxième séparateur de faisceau (151) configuré pour envoyer lesdites ondes d'illumination sur ledit miroir de référence (153) et sur un deuxième miroir (154), ledit deuxième miroir (154) étant agencé dans un plan conjugué avec un plan pupille dudit objectif de microscope, et présentant une inclinaison variable (θx) par rapport à un axe optique défini par l'axe optique de l'objectif de microscope;
- le bras objet (160) comprend un troisième séparateur de faisceau (161) configuré pour envoyer lesdites ondes d'illumination sur ledit milieu hétérogène (SMP) et sur un troisième miroir (162), ledit troisième miroir (162) étant agencé dans un plan conjugué avec un plan pupille dudit objectif de microscope, perpendiculairement à un axe optique défini par l'axe optique de l'objectif de microscope.

17. Système de caractérisation optique non invasive d'un milieu hétérogène selon la revendication 15, comprenant en outre :

- un deuxième interféromètre illuminateur (170) configuré pour recevoir lesdites ondes lumineuses incohérentes spatialement issues du dispositif d'émission lumineuse (110) et former deux ondes d'illumination polarisées de polarisations orthogonales et présentant un décalage spatial dans un plan conjugué avec le plan focal ; et dans lequel
- ledit premier interféromètre (180) comprend un élément séparateur de polarisation (181) configuré pour envoyer respectivement sur les bras objet et de référence, chacune desdites ondes polarisées de polarisations orthogonales et présentant un décalage spatial.

**Patentansprüche**

1. Verfahren zur nicht-invasiven optischen Charakterisierung eines heterogenen Mediums, wobei das Verfahren die folgenden Schritte umfasst:

- einen Schritt des Beleuchtens eines gegebenen Sichtfeldes des heterogenen Mediums, das in einer Fokalebene eines Mikroskopobjektivs positioniert ist, mittels einer Reihe von einfallenden Lichtwellen; wobei das Verfahren **dadurch gekennzeichnet ist, dass** es umfasst:
- einen Schritt des Erfassens einer ersten Verzerrungsmatrix ($D_{ur}$, $D_{rr}$) in einer Beobachtungsbasis, die zwischen einer konjugierten Ebene der Fokalebene und einer Beobachtungsebene definiert ist, wobei die erste Verzerrungsmatrix in einer Korrekturbasis, die zwischen einer konjugierten Ebene der Fokalebene und einer Aberrationskorrekturebene definiert ist, dem elementweisen Matrixprodukt einer in der Korrekturbasis erfassten ersten Reflexionsmatrix ($R_{ur}$) des Sichtfelds mit der phasenkonjugierten Matrix einer Referenzreflexionsmatrix entspricht, die für ein Modellmedium in der Korrekturbasis definiert ist;
- einen Schritt des Erfassens zumindest einer Abbildung eines physikalischen Parameters des heterogenen Mediums aus der ersten Verzerrungsmatrix.

2. Verfahren nach Anspruch 1, wobei das Erfassen der ersten Verzerrungsmatrix ($D_{ur}$, $D_{rr}$) die folgenden Schritte umfasst umfasst:

- einen Schritt des experimentellen Erfassens der ersten Reflexionsmatrix ($\mathbf{R_{ur}}$, $\mathbf{R_{rr}}$) in der Beobachtungsbasis;
- Erstellen der ersten Verzerrungsmatrix aus der ersten Reflexionsmatrix und der Referenzreflexionsmatrix, die in der gleichen Basis definiert ist.

3. Verfahren nach Anspruch 2, wobei die Beobachtungsbasis die Korrekturbasis ist und die erste Verzerrungsmatrix aus dem elementweisen Matrixprodukt der in der Korrekturbasis erfassten ersten Reflexionsmatrix ($\mathbf{R_{ur}}$) des Sichtfeldes mit der phasenkonjugierten Matrix der in der gleichen Basis definierten Referenzreflexionsmatrix erstellt wird.

4. Verfahren nach Anspruch 2, wobei die Beobachtungsbasis eine "Fokalebenen"-Basis ist, die zwischen zwei konjugierten Ebenen der Fokalebene definiert ist, und die erste Verzerrungsmatrix durch die räumliche Korrelation zwischen jeder Zeile und/oder Spalte der "Fokalebenen"-Reflexionsmatrix ($\mathbf{R_{rr}}$), die in der "Fokalebenen"-Basis definiert ist, und der gleichen Zeile und/oder Spalte der Referenzreflexionsmatrix, die in der gleichen Basis definiert ist, erstellt wird.

5. Verfahren nach Anspruch 1, wobei:

- der Schritt des Beleuchtens das Beleuchten eines Objektarms und eines Referenzarms eines Interferometers mit identischen, räumlich kohärenten Lichtwellen umfasst, wobei der Objektarm das Mikroskopobjektiv (30) umfasst, in dessen Fokalebene sich das heterogene Medium befindet, und der Referenzarm einen Referenzspiegel (123) umfasst;
- die erste Verzerrungsmatrix ($\mathbf{D_{ur}}$) in der Korrekturbasis erfasst wird und das Erfassen der ersten Verzerrungsmatrix die folgenden Schritte umfasst:

  o für jede Lichtwelle, die in einem Punkt ($\mathbf{r_{in}}$) der Fokalebene einfällt, das Aufzeichnen eines Interferogramms in der Korrekturebene, das aus der Interferenz zwischen dem von dem Punkt reflektierten elektromagnetischen Feld und dem von dem Referenzspiegel reflektierten elektromagnetischen Feld resultiert;
  o Erstellen der ersten Verzerrungsmatrix, wobei jede Spalte der ersten Verzerrungsmatrix für eine einfallende Lichtwelle, die auf einen Punkt ($\mathbf{r_{in}}$) der Fokalebene fokussiert ist, dem elektromagnetischen Feld entspricht, das dem Kreuz-Interferenzterm des Interferogramms zugeordnet ist.

6. Verfahren nach Anspruch 1, wobei:

- der Schritt des Beleuchtens das Beleuchten eines Objektarms und eines Referenzarms eines ersten Interferometers mit räumlich inkohärenten Lichtwellen umfasst, wobei der Objektarm das Mikroskopobjektiv (30) umfasst, in dessen Fokalebene sich das heterogene Medium befindet, und der Referenzarm einen Referenzspiegel (153, 185) umfasst, wobei die von dem heterogenen Medium und dem Referenzspiegel am Ausgang des ersten Interferometers reflektierten Wellen eine räumliche Verschiebung in einer mit der Fokalebene konjugierten Ebene aufweisen, wobei die Verschiebung variabel ist;
- die erste Verzerrungsmatrix ($\mathbf{D_{rr}}$) in einer "Fokalebenen"-Basis erfasst wird, die zwischen zwei konjugierten Ebenen der Fokalebene definiert ist, und das Erfassen der ersten Verzerrungsmatrix die folgenden Schritte umfasst:

  o für jede räumliche Verschiebung ($\mathbf{r_{out}}$-$\mathbf{r_{in}}$) das Aufzeichnen eines Interferogramms in einer konjugierten Ebene der Fokalebene, das aus der Interferenz zwischen den genannten Wellen resultiert, die von dem heterogenen Medium und dem Referenzspiegel reflektiert werden und räumlich verschoben sind;
  o Erstellen der ersten Verzerrungsmatrix, wobei jede Zeile der ersten Verzerrungsmatrix für einen Wert der räumlichen Verschiebung dem elektromagnetischen Feld entspricht, das dem Kreuz-Interferenzterm des Interferogramms zugeordnet ist.

7. Verfahren nach einem der vorhergehenden Ansprüche, wobei das Erfassen zumindest einer Abbildung eines physikalischen Parameters des heterogenen Mediums umfasst:

- Erfassen der Invarianten in der Fokalebene der ersten Verzerrungsmatrix, um zumindest einen ersten isoplanaren Bereich in der Fokalebene zu erkennen;
- für jeden erkannten ersten isoplanaren Bereich Erfassen einer Abbildung von zumindest einem ersten Aberrationsgesetz in der Korrekturebene.

8. Verfahren nach Anspruch 7, wobei das Erfassen der Invarianten in der Fokalebene der ersten Verzerrungsmatrix eine Singulärwertzerlegung von zumindest einer der Matrizen aus der Gruppe von Matrizen umfasst, die Folgendes umfasst: die erste Verzerrungsmatrix, die normalisierte erste Verzerrungsmatrix, eine normalisierte Korrelationsmatrix der ersten Verzerrungsmatrix.

9. Verfahren nach einem der Ansprüche 7 bis 8, ferner umfassend das Erfassen einer Reflexionsmatrix des Sichtfelds, die durch das bzw. die erste(n) Aberrationsgesetz(e) korrigiert ist, in der Beobachtungsbasis.

10. Verfahren nach Anspruch 9, ferner umfassend:

- Erfassen einer zweiten Verzerrungsmatrix, die in der Korrekturbasis dem elementweisen Matrixprodukt der in der Korrekturbasis erfassten korrigierten Reflexionsmatrix mit der phasenkonjugierten Matrix der Referenzreflexionsmatrix entspricht.

11. Verfahren nach Anspruch 10, ferner umfassend:

- Erfassen der Invarianten in der Fokalebene der zweiten Verzerrungsmatrix, um zumindest einen zweiten isoplanaren Bereich in der Fokalebene zu erkennen;
- für jeden erkannten zweiten isoplanaren Bereich Erfassen einer Abbildung eines zweiten Aberrationsgesetzes in der Korrekturebene.

12. Verfahren nach einem der vorhergehenden Ansprüche, wobei das Erfassen zumindest einer Abbildung eines physikalischen Parameters des heterogenen Mediums das Erfassen einer ersten Verteilungsfunktion (PSF) in der Fokalebene für zumindest einen erkannten ersten isoplanaren Bereich umfasst.

13. System zur nicht-invasiven optischen Charakterisierung eines heterogenen Mediums, umfassend:

- ein erstes Mikroskopobjektiv (30), das eine Fokalebene definiert, in der das heterogene Medium positioniert werden soll;
- eine Lichtemissionsvorrichtung (110) für die Emission einer Reihe von einfallenden Lichtwellen, die dazu bestimmt sind, durch das Mikroskopobjektiv ein gegebenes Sichtfeld des heterogenen Mediums zu beleuchten;
- einen 2D-Erfassungsdetektor (130), der in einer Beobachtungsebene angeordnet ist;
- ein erstes Interferometer, das mit der Lichtemissionsvorrichtung und dem 2D-Erfassungsdetektor gekoppelt ist und einen Objektarm mit dem Mikroskopobjektiv (30) und einen Referenzarm mit einem Referenzspiegel im Brennpunkt eines zweiten Mikroskopobjektivs (123, 152, 184) umfasst, wobei das erste Interferometer dazu ausgelegt ist, an der Beobachtungsebene Interferenzen zwischen Wellen zu bilden, die von dem heterogenen Medium und dem Referenzspiegel reflektiert werden,
- eine Recheneinheit (140), die mit dem 2D-Erfassungsdetektor gekoppelt ist, wobei das System **dadurch gekennzeichnet ist, dass** die Recheneinheit dazu ausgelegt ist:

  ◦ aus den Interferogrammen, die sich aus den Interferenzen ergeben, eine erste Verzerrungsmatrix ($D_{ur}$, $D_{rr}$) in einer Beobachtungsbasis zu erfassen, die zwischen einer konjugierten Ebene der Fokalebene und der Beobachtungsebene definiert ist, wobei die erste Verzerrungsmatrix in einer Korrekturbasis, die zwischen einer konjugierten Ebene der Fokalebene und einer Aberrationskorrekturebene definiert ist, dem elementweisen Matrixprodukt einer in der Korrekturbasis erfassten ersten Reflexionsmatrix ($R_{ur}$) des Sichtfelds mit der phasenkonjugierten Matrix einer Referenzreflexionsmatrix, die für ein Modellmedium definiert ist, in der Korrekturbasis entspricht;
  ◦ aus der ersten Verzerrungsmatrix zumindest eine Abbildung eines physikalischen Parameters des heterogenen Mediums zu erfassen.

14. System zur nicht-invasiven optischen Charakterisierung eines heterogenen Mediums nach Anspruch 13, wobei:

- die Lichtemissionsvorrichtung (110) dazu ausgelegt ist, den Objektarm und den Referenzarm mit identischen, räumlich kohärenten Lichtwellen zu beleuchten;
- die Beobachtungsebene eine Aberrationskorrekturebene ist und die 2D-Erfassungsvorrichtung dazu ausgelegt ist, in der Korrekturebene und für jede Lichtwelle, die auf einen Punkt ($r_{in}$) der Fokalebene fällt, ein Interferogramm aufzuzeichnen, das aus der Interferenz zwischen dem von diesem Punkt reflektierten elektromagnetischen Feld und dem vom Referenzspiegel reflektierten elektromagnetischen Feld resultiert;
- die Recheneinheit für die Erstellung der ersten Verzerrungsmatrix ausgelegt ist, wobei jede Spalte der ersten Verzerrungsmatrix für eine einfallende Lichtwelle, die auf einen Punkt ($r_{in}$) der Fokalebene fokussiert wird, dem elektromagnetischen Feld entspricht, das dem Kreuz-Interferenzterm des Interferogramms zugeordnet ist.

15. System zur nicht-invasiven optischen Charakterisierung eines heterogenen Mediums nach Anspruch 13, wobei:

- die Lichtemissionsvorrichtung (110) dazu ausgelegt ist, das gesamte Sichtfeld am Objekt- und Referenzarm mittels räumlich inkohärenter Lichtwellen zu beleuchten;
- das erste Interferometer dazu ausgelegt ist, am Ausgang des ersten Interferometers Wellen zu bilden, die von dem heterogenen Medium und dem Referenzspiegel reflektiert werden, untereinander kohärent sind und eine räumliche Verschiebung in einer Ebene aufweisen, die mit der Fokalebene konjugiert ist, wobei die Verschiebung variabel ist;
- die Beobachtungsebene eine mit der Fokalebene konjugierte Ebene ist und die 2D-Erfassungsvorrichtung dazu ausgelegt ist, in der Beobachtungsebene und für jede räumliche Verschiebung ein Interferogramm aufzuzeichnen, das aus der Interferenz zwischen den von dem heterogenen Medium und dem Referenzspiegel reflektierten und räumlich verschobenen Wellen resultiert;
- die Recheneinheit für die Erstellung der ersten Verzerrungsmatrix ausgelegt ist, wobei jede Zeile der ersten Verzerrungsmatrix für einen Wert der räumlichen Verschiebung dem elektromagnetischen Feld entspricht, das dem Kreuz-Interferenzterm des Interferogramms zugeordnet ist.

16. System zur nicht-invasiven optischen Charakterisierung eines heterogenen Mediums nach Anspruch 15, wobei:

- das erste Interferometer einen ersten Strahlteiler (121) aufweist, der dazu ausgelegt ist, den Objektarm (160) und den Referenzarm (150) zu bilden;
- der Referenzarm (150) einen zweiten Strahlteiler (151) aufweist, der dazu ausgelegt ist, die Beleuchtungswellen auf den Referenzspiegel (153) und auf einen zweiten Spiegel (154) zu leiten, wobei der zweite Spiegel (154) in einer Ebene angeordnet ist, die mit einer Pupillenebene des Mikroskopobjektivs konjugiert ist, und eine variable Neigung (0x) in Bezug auf eine optische Achse aufweist, die durch die optische Achse des Mikroskopobjektivs definiert ist;
- der Objektarm (160) einen dritten Strahlteiler (161) aufweist, der dazu ausgelegt ist, die Beleuchtungswellen auf das heterogene Medium (SMP) und auf einen dritten Spiegel (162) zu leiten, wobei der dritte Spiegel (162) in einer Ebene angeordnet ist, die mit einer Pupillenebene des Mikroskopobjektivs konjugiert ist, und zwar senkrecht zu einer optischen Achse, die durch die optische Achse des Mikroskopobjektivs definiert ist.

17. System zur nicht-invasiven optischen Charakterisierung eines heterogenen Mediums nach Anspruch 15, ferner umfassend:

- ein zweites Illuminator-Interferometer (170), das dazu ausgelegt ist, die räumlich inkohärenten Lichtwellen von der Lichtemissionsvorrichtung (110) zu empfangen und zwei polarisierte Beleuchtungswellen mit orthogonalen Polarisationen zu bilden, die eine räumliche Verschiebung in einer Ebene aufweisen, die mit der Fokalebene konjugiert ist; und wobei
- das erste Interferometer (180) ein Polarisationsseparatorelement (181) umfasst, das dazu ausgelegt ist, die polarisierten Wellen mit orthogonalen Polarisationen und mit einer räumlichen Verschiebung jeweils auf den Objektarm bzw. den Referenzarm zu leiten.

**Claims**

1. A method for the non-invasive optical characterization of a heterogeneous medium, the method comprising:

- a step of illuminating, by means of a series of incident light waves, a given field of view of said heterogeneous medium, positioned in a focal plane of a microscope objective; the method being **characterized in that** it comprises:
- a step of determining a first distortion matrix ($D_{ur}$, $D_{rr}$) in an observation basis defined between a conjugate plane of said focal plane and an observation plane, said first distortion matrix corresponding, in a correction basis defined between a conjugate plane of said focal plane and an aberration correction plane, to the term-by-term matrix product of a first reflection matrix ($R_{ur}$) of said field of view, determined in said correction basis, with the phase conjugate matrix of a reference reflection matrix, defined for a model medium, in said correction basis;

- a step of determining, on the basis of said first distortion matrix, at least one mapping of a physical parameter of said heterogeneous medium.

2. The method as claimed in claim 1, wherein the determination of said first distortion matrix ($\mathbf{D}_{ur}$, $\mathbf{D}_{rr}$) comprises:

   - a step of experimentally determining said first reflection matrix ($\mathbf{R}_{ur}$, $\mathbf{R}_{rr}$) in said observation basis;
   - constructing said first distortion matrix on the basis of said first reflection matrix and said reference reflection matrix defined in the same basis.

3. The method as claimed in claim 2, wherein said observation basis is the correction basis, and said first distortion matrix is constructed by the term-by-term matrix product of said first reflection matrix ($\mathbf{R}_{ur}$) of said field of view determined in the correction basis with the phase conjugate matrix of the reference reflection matrix defined in the same basis.

4. The method as claimed in claim 2, wherein said observation basis is a focused basis defined between two conjugate planes of the focal plane, and said first distortion matrix is constructed by the spatial correlation between each row and/or column of the focused reflection matrix ($\mathbf{R}_{rr}$) defined in said focused basis and the same row and/or column of the reference reflection matrix defined in the same basis.

5. The method as claimed in claim 1, wherein:

   - said illuminating step comprises illuminating an object arm and a reference arm of an interferometer by means of identical, spatially coherent light waves, the object arm comprising the microscope objective (30) in the focal plane of which is located said heterogeneous medium and the reference arm comprising a reference mirror (123);
   - said first distortion matrix ($\mathbf{D}_{ur}$) is determined in said correction basis and the determination of the first distortion matrix comprises the following steps:

     ◦ for each light wave incident at a point ($\mathbf{r}_{in}$) of the focal plane, acquiring, in said correction plane, an interferogram resulting from the interference between the electromagnetic field reflected by said point and the electromagnetic field reflected by the reference mirror;
     ◦ constructing said first distortion matrix, each column of the first distortion matrix corresponding, for an incident light wave focused at a point ($\mathbf{r}_{in}$) of the focal plane, to the electromagnetic field associated with the cross-interference term of said interferogram.

6. The method as claimed in claim 1, wherein:

   - said illuminating step comprises illuminating an object arm and a reference arm of a first interferometer by means of spatially incoherent light waves, the object arm comprising the microscope objective (30) in the focal plane of which is located said heterogeneous medium and the reference arm comprising a reference mirror (153, 185), the waves reflected by the heterogeneous medium and the reference mirror at the exit of the first interferometer exhibiting a spatial shift in a plane conjugate with the focal plane, the shift being variable;
   - said first distortion matrix ($\mathbf{D}_{rr}$) is determined in a focused basis defined between two conjugate planes of the focal plane and the determination of said first distortion matrix comprises the following steps:

     ◦ for each spatial shift ($\mathbf{r}_{out}$-$\mathbf{r}_{in}$), acquiring, in a conjugate plane of the focal plane, an interferogram resulting from the interference between said waves reflected by the heterogeneous medium and the reference mirror and spatially shifted;
     ◦ constructing said first distortion matrix, each row of the first distortion matrix corresponding, for a spatial shift value, to the electromagnetic field associated with the cross-interference term of said interferogram.

7. The method as claimed in any one of the preceding claims, wherein the determination of at least one mapping of a physical parameter of said heterogeneous medium comprises:

   - determining the invariants in said focal plane of said first distortion matrix, in order to identify at least one first isoplanatic domain in said focal plane;
   - determining, for each first isoplanatic domain identified, a mapping of at least one first aberration law in said correction plane.

8. The method as claimed in claim 7, wherein the determination of the invariants in said focal plane of said first distortion matrix comprises a singular value decomposition of at least one of the matrices of the group of matrices comprising: said first distortion matrix, said first normalized distortion matrix, a normalized correlation matrix of said first distortion matrix.

9. The method as claimed in either one of claims 7 and 8, further comprising determining, in said observation basis, a reflection matrix of said field of view corrected by said one or more first aberration laws.

10. The method as claimed in claim 9, further comprising:

- determining a second distortion matrix corresponding, in said correction basis, to the term-by-term matrix product of said corrected reflection matrix determined in said correction basis, with the phase conjugate matrix of said reference reflection matrix.

11. The method as claimed in claim 10, further comprising:

- determining the invariants in said focal plane of said second distortion matrix, in order to identify at least one second isoplanatic domain in said focal plane;
- determining, for each second isoplanatic domain identified, a mapping of a second aberration law in said correction plane.

12. The method as claimed in any one of the preceding claims, wherein the determination of at least one mapping of a physical parameter of said heterogeneous medium comprises determining, for at least one first isoplanatic domain identified, a first point spread function (PSF) in said focal plane.

13. A system for the non-invasive optical characterization of a heterogeneous medium comprising:

- a first microscope objective (30) defining a focal plane in which said heterogeneous medium is intended to be positioned;
- a light emitting device (110) for emitting a series of incident light waves, which are intended to illuminate, through said microscope objective, a given field of view of said heterogeneous medium;
- a two-dimensional acquisition detector (130) arranged in an observation plane;
- a first interferometer coupled to the light emitting device and to the two-dimensional acquisition detector, comprising an object arm with said microscope objective (30) and a reference arm comprising a reference mirror at the focal point of a second microscope objective (123, 152, 184), said first interferometer being configured to form, at said observation plane, interferences between waves reflected by the heterogeneous medium and said reference mirror,
- a computing unit (140), coupled to the two-dimensional acquisition detector, the system being **characterized in that** the computing unit is configured to:

  o determine, on the basis of the interferograms resulting from said interferences, a first distortion matrix ($\mathbf{D_{ur}}$, $\mathbf{D_{rr}}$) in an observation basis defined between a conjugate plane of said focal plane and said observation plane, said first distortion matrix corresponding, in a correction basis defined between a conjugate plane of said focal plane and an aberration correction plane, to the term-by-term matrix product of a first reflection matrix ($\mathbf{R_{ur}}$) of said field of view determined in said correction basis, with the phase conjugate matrix of a reference reflection matrix, defined for a model medium, in said correction basis;
  o determine, on the basis of said first distortion matrix, at least one mapping of a physical parameter of said heterogeneous medium.

14. The system for the non-invasive optical characterization of a heterogeneous medium as claimed in claim 13, wherein:

- said light emitting device (110) is configured to illuminate said object arm and said reference arm by means of identical, spatially coherent light waves;
- the observation plane is an aberration correction plane and the two-dimensional acquisition device is configured to acquire, in said correction plane, and for each light wave incident at a point ($\mathbf{r_{in}}$) of the focal plane, an interferogram resulting from the interference between the electromagnetic field reflected by said point and the electromagnetic field reflected by the reference mirror;
- the computing unit is configured to construct said first distortion matrix, each column of the first distortion matrix corresponding, for an incident light wave focused at a point ($\mathbf{r_{in}}$) of the focal plane, to the electromagnetic field associated with the cross-interference term of said interferogram.

15. The system for the non-invasive optical characterization of a heterogeneous medium as claimed in claim 13, wherein:

- said light emitting device (110) is configured to illuminate the entire field of view on said object and reference arms by means of spatially incoherent light waves;
- the first interferometer is configured to form, at the exit of said first interferometer, waves reflected by said heterogeneous medium and said reference mirror, which are mutually coherent, and exhibit a spatial shift in a plane conjugate with the focal plane, the shift being variable;
- the observation plane is a plane conjugate with the focal plane and the two-dimensional acquisition device is configured to acquire, in said observation plane, and for each spatial shift, an interferogram resulting from the interference between said waves reflected by the heterogeneous medium and the reference mirror and spatially shifted;
- the computing unit is configured to construct said first distortion matrix, each row of the first distortion matrix corresponding, for a spatial shift value, to the electromagnetic field associated with the cross-interference term of said interferogram.

16. The system for the non-invasive optical characterization of a heterogeneous medium as claimed in claim 15, wherein:

- The first interferometer comprises a first beam splitter (121) configured to form said object (160) and reference (150) arms;
- the reference arm (150) comprises a second beam splitter (151) configured to send said illuminating waves to said reference mirror (153) and to a second mirror (154), said second mirror (154) being arranged in a plane conjugate with a pupil plane of said microscope objective, and exhibiting a variable inclination ($\theta x$) with respect to an optical axis defined by the optical axis of the microscope objective;
- the object arm (160) comprises a third beam splitter (161) configured to send said illuminating waves to said heterogeneous medium (SMP) and to a third mirror (162), said third mirror (162) being arranged in a plane conjugate with a pupil plane of said microscope objective, perpendicular to an optical axis defined by the optical axis of the microscope objective.

17. The system for the non-invasive optical characterization of a heterogeneous medium as claimed in claim 15, further comprising:

- a second illuminating interferometer (170) configured to receive said spatially incoherent light waves from the light emitting device (110) and to form two polarized illuminating waves with orthogonal polarizations and exhibiting a spatial shift in a plane conjugate with the focal plane; and wherein
- said first interferometer (180) comprises a polarization splitting element (181) configured to send to the object and reference arms, respectively, each of said polarized waves with orthogonal polarizations and exhibiting a spatial shift.

FIG.1A
(ART ANTERIEUR)

FIG.1B
(ART ANTERIEUR)

FIG.1C
(ART ANTERIEUR)

FIG.1D
(ART ANTERIEUR)

EP 3 824 269 B1

FIG. 2 (ART ANTERIEUR)

FIG. 3A

FIG. 3B

FIG. 4

FIG.5A

FIG.5C

FIG.5B

FIG.5D

FIG.6A

FIG.6B

FIG.6C

EP 3 824 269 B1

FIG.7A

U₁(u_out)

FIG.7B

V₁(r_in)

FIG.7C

FIG.8A

FIG.8B

FIG.8D

FIG.8C

FIG.9A

FIG.9B

FIG.9C

FIG.9D

EP 3 824 269 B1

FIG.10A

FIG.10B

FIG.10C

FIG.10D

FIG.11A

110           100

112

InP

114b

113

111

SP

131b    $\mathbf{u_{out}}$   OutP      121    122

$\mathbf{r'_{in}}$

$D(\mathbf{u_{out}}, \mathbf{r'_{in}})$

130          123

140

30

SMP

FP        $\mathbf{r'_{in}}$

FIG.11B

FIG.12

FIG.13

FIG.14B

FIG.14A

FIG.15A

$D(r'_{out} | r_{in})$

Ligne centrale

Image oct en-face

FIG.15C

$R(r_{out} | r_{in})$

TF 2D en sortie

FIG.15B

moyenne

Fonction d'étalement

$D(u_{out} | r_{in})$ (phase)

FIG.15D

FIG.15E

EP 3 824 269 B1

Lois d'aberration dans le plan pupille

(a)          (b)          (c)

# FIG.16A

Images associées dans le plan focal

(a)          (b)          (c)

# FIG.16B

Fonction d'étalement

(a)          (b)          (c)

# FIG.16C

# FIG.16D          FIG.16E

## FIG.17B
Image oct en-face

## FIG.17D
Image corrigée

## FIG.17A

## FIG.17C

(a)

(b)

EP 3 824 269 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040061867 A

**Littérature non-brevet citée dans la description**

- **M. J. BOOTH.** *Light Sci. Appl.,* 2014, vol. 3, e165
- **J. MERTZ et al.** Field of view advantage of conjugate adaptive optics in microscopy applications. *Appl. Opt.,* 2015, vol. 54, 3498-3506
- **S. M. POPOFF et al.** *Phys. Rev. Lett.,* 2010, vol. 104, 100601
- **A. BADON et al.** Smart optical cohérence tomography for ultra-deep imaging through highly scattering media. *Sci. Adv.,* 2016, vol. 2, e1600370
- **YU et al.** *Optics Communications,* 2015, vol. 352, 33-38
- **A. BADON et al.** *Optica,* 2016, vol. 3, 1160-1166
- **KANG et al.** Imaging deep within a scattering medium using collective accumulation of single-scattered waves. *Nat. Photonics,* 2015, vol. 9, 253-258
- **A. DUBOIS et al.** High resolution full field optical cohrence tomography with a Linnik microscope. *Appl. Opt.,* 2002, vol. 41, 805